# EUROPEAN PATENT APPLICATION

(11) **EP 4 644 197 A1**
(43) Date of publication of application: **05.11.2025**
(21) Application number: 23833205.0
(22) Date of filing: 06.12.2023
(51) Int. Cl.: B60T 13/74

(54) **BRAKE SYSTEM AND SADDLE-RIDING-TYPE VEHICLE**

(30) Priority: 28.12.2022 JP 2022212660
(71) Applicant: Robert Bosch GmbH, 70442 Stuttgart (DE)
(72) Inventor: FELLMETH, Martin Reiner, Yokohama-shi, Kanagawa 224-8501 (JP); MANNHERZ, Edith, Yokohama-shi, Kanagawa 224-8501 (JP); BOLLWERK, Andre, Yokohama-shi, Kanagawa 224-8501 (JP)
(74) Representative: Isarpatent
(86) International application number: PCT/IB2023/062308
(87) International publication number: WO 2024/141834

(57) **Abstract**

A brake system 100 of a two-wheeled motor vehicle 10 includes: a front-wheel braking section 20 braking a front wheel 3; a rear-wheel braking section 40 braking a rear wheel 4; and operation elements 11a, 11b operated by a rider. The front-wheel braking section 20 includes a first friction brake mechanism 21a that is connected to a friction application section 22 applying a friction force only to the front wheel 3 and controls a braking force generated by the friction application section 22. The rear-wheel braking section 40 includes a regenerative brake mechanism 5 generating a regenerative braking force on the rear wheel 4. The front-wheel braking section 20 includes a second friction brake mechanism 21b connected to the friction application section 22 and capable of controlling the braking force generated by the friction application section 22 in a manner to be independent of the first friction brake mechanism 21a.

## Description

### Technical Field

The present invention relates to a brake system for a straddle-type vehicle and a straddle-type vehicle including the brake system.

### Background Art

Conventionally, as an example of a brake system for a straddle-type vehicle, a brake system for a two-wheeled motor vehicle in which a rear wheel is driven by an electric motor has been available. Such a brake system is configured to include: a regenerative brake mechanism that uses rotary power of the rear wheel to make the electric motor function as a generator and generate regenerative torque, applies the regenerative torque to the rear wheel, and thereby brakes the rear wheel; and a friction brake mechanism that generates a friction force on a front wheel in response to an operation of a brake lever by a rider and thereby brakes the front wheel (for example, see PTL 1).

### Citation List

### Patent Literature

PTL 1: JP2015-523259A

### Summary of Invention

### Technical Problem

In the brake system that is configured as described in PTL 1, the regenerative brake mechanism inputs the rotary power of the rear wheel to a rotational shaft of the electric motor, thereby makes the electric motor function as the generator, and brakes a wheel of the straddle-type vehicle with the regenerative torque that is generated during the power generation. Accordingly, for example, when a rotational frequency of the rear wheel, to which the electric motor is connected, is low, or when rotation of the rear wheel is stopped, a regenerative braking force that can be generated by the regenerative brake mechanism may be insufficient relative to a target value. In addition, for example, when the generated electric power cannot be stored in a battery and the electric motor cannot function as the generator, or the like, the regenerative braking force may not be generated. As a result, in some cases, the straddle-type vehicle cannot be stopped from a travel state or cannot maintain a stopped state.

The invention has been made with the above-described problem as the background and therefore has a purpose of providing a brake system for a straddle-type vehicle capable of improving safety during braking. The invention also has a purpose of providing a straddle-type vehicle including such a brake system.

### Solution to Problem

A brake system according to the invention is a brake system for a straddle-type vehicle of a rear-wheel-drive type, and includes: a front-wheel braking section that brakes a front wheel of the straddle-type vehicle; a rear-wheel braking section that brakes a rear wheel of the straddle-type vehicle; and at least one operation element that is operated by a rider of the straddle-type vehicle. The front-wheel braking section includes a first friction brake mechanism that is connected to a friction application section applying a friction force only to the front wheel and controls a braking force generated by the friction application section. The rear-wheel braking section does not include a friction brake mechanism that generates a braking force by friction, but includes a regenerative brake mechanism that generates a regenerative braking force on the rear wheel. The front-wheel braking section further includes a second friction brake mechanism that is connected to the friction application section and can control the braking force generated by the friction application section in a manner to be independent of the first friction brake mechanism.

A straddle-type vehicle according to the invention includes the above-described brake system.

With such a configuration, the front-wheel braking section includes the second friction brake mechanism that can control the braking force generated by the friction application section in the manner to be independent of the first friction brake mechanism. Accordingly, when the second friction brake mechanism generates the friction force to brake the front wheel that exerts a significant impact on stability and operability of the straddle-type vehicle, it is possible to generate the braking force by the second friction brake mechanism in the independent manner in addition to the first friction brake mechanism and the regenerative brake mechanism while maintaining the stability and the operability of the straddle-type vehicle. Therefore, it is possible to improve safety during braking.

### Brief Description of Drawings

Fig. 1 is a view for illustrating a straddle-type vehicle according to a first embodiment.
Fig. 2 is a view for illustrating a front-wheel braking section in a brake system.
Fig. 3 is a view for illustrating a rear-wheel braking section in the brake system.
Fig. 4 is a view for illustrating a hydraulic pressure adjustment unit.
Fig. 5 is a diagram for illustrating a system configuration of the brake system.
Fig. 6 is a view for illustrating a first modified example of the front-wheel braking section.
Fig. 7 is a view for illustrating a second modified example of the front-wheel braking section.
Fig. 8 is a view for illustrating a third modified example of the front-wheel braking section.
Fig. 9 is a view for illustrating a fourth modified example of the front-wheel braking section.
Fig. 10 is a view for illustrating a fifth modified example of the front-wheel braking section.
Fig. 11 is a view for illustrating a brake system according to a second embodiment.
Fig. 12 is a view for illustrating a friction application unit.
Fig. 13 is a diagram for illustrating a system configuration of the brake system.

### Description of Embodiments

A description will hereinafter be made on embodiments for implementing a brake system according to the invention and a straddle-type vehicle including the brake system with reference to the drawings. In the embodiments, a description will be made on a case where the brake system according to the invention is applied to a two-wheeled motor vehicle as the straddle-type vehicle. However, the brake system according to the invention may be applied to a motorcycle other than the two-wheeled motor vehicle. The motorcycle includes a three-wheeled motor vehicle. Examples of the two-wheeled motor vehicle and the three-wheeled motor vehicle are a motorbike, a scooter, and an electric scooter.

A configuration, operation, and the like, which will be described in each of the embodiments, merely constitute one example, and each of the brake system and the straddle-type vehicle according to the invention is not limited to a case with such a configuration, such operation, and the like. In the drawings, the same or similar members or portions will be denoted by the same reference sign or will not be denoted by the reference sign. A detailed structure will appropriately be illustrated in a simplified manner or will not be illustrated. The overlapping or similar description may appropriately be simplified or may not be made below.

### <First Embodiment>

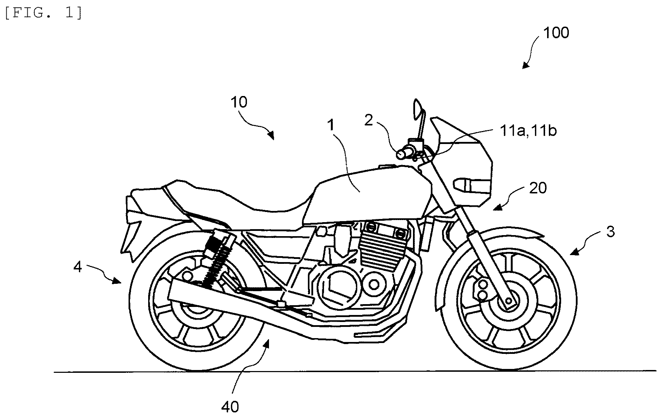

A description will be made on a first embodiment of the brake system according to the invention and the straddle-type vehicle including the brake system with reference to Fig. 1 to Fig. 5.

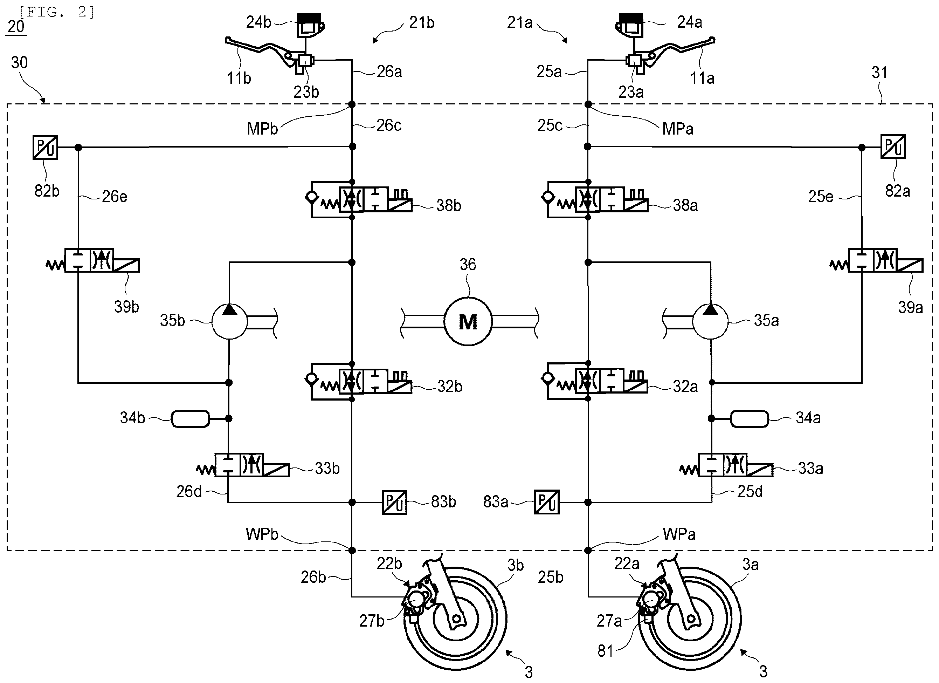

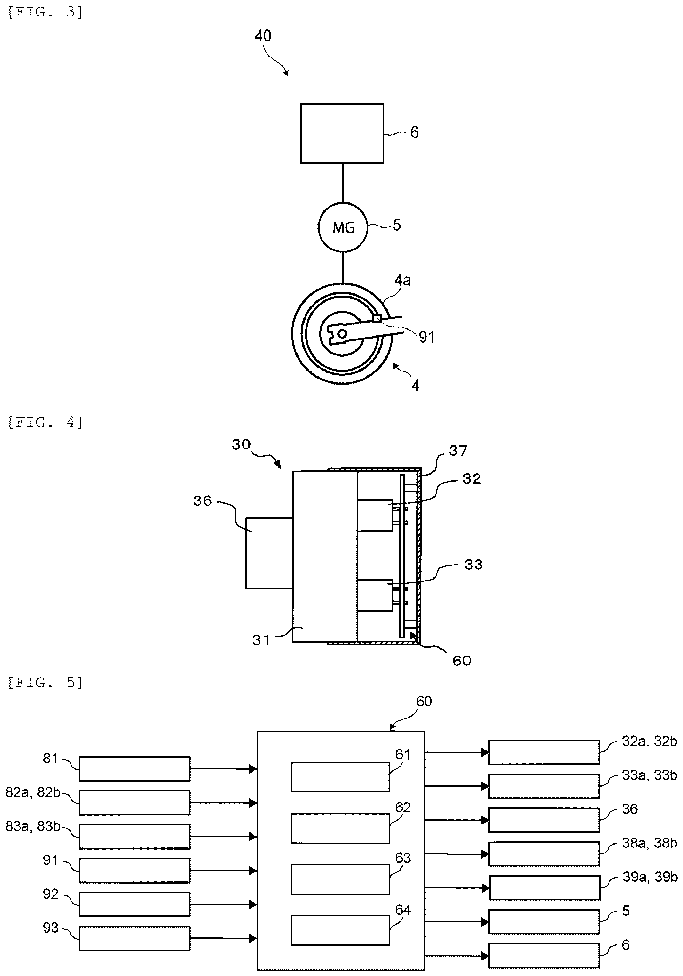

Fig. 1 is a view for illustrating a two-wheeled motor vehicle 10 as a straddle-type vehicle, to which a brake system 100 according to the first embodiment is mounted. Fig. 2 is a view for illustrating a front-wheel braking section 20 in the brake system 100. Fig. 3 is a view for illustrating a rear-wheel braking section 40 in the brake system 100. Fig. 4 is a view for illustrating a hydraulic pressure adjustment unit 30. Fig. 5 is a diagram for illustrating a system configuration of the brake system 100.

### <Regarding Straddle-Type Vehicle>

As illustrated in Fig. 1, the two-wheeled motor vehicle 10 as the straddle-type vehicle includes: a trunk 1; a handlebar 2 that is held by the trunk 1 in a freely turnable manner; a front wheel 3 that is held with the handlebar 2 by the trunk 1 in a freely turnable manner; a rear wheel 4 that is held by the trunk 1 in a freely rotatable manner; an electric motor 5 (see Fig. 2) that serves as a drive source for driving the rear wheel 4; a power supply unit 6 (see Fig. 2) that supplies electric power to the electric motor 5; and the brake system 100 that brakes the front wheel 3 and the rear wheel 4.

The electric motor 5 is an electrically-powered motor (for example, an AC motor, a brushless DC motor, a synchronous motor, an induction motor, or the like) that is supplied with the electric power from a power supply unit to generate rotary torque, and drives the rear wheel 4 by using the rotary torque via a power transmission mechanism (not illustrated) that includes a transmission. The electric motor 5 can also function as a generator, and can generate the electric power by using rotary power of the rear wheel 4. The electric motor may have a configuration (for example, a wheel-in motor or the like) that a rotational shaft of the electric motor 5 is directly connected to a rotational shaft of the rear wheel 4 so as to drive the rear wheel 4.

The power supply unit 6 includes a power storage device (for example, a battery, a capacitor, or the like, which will not be illustrated) capable of temporarily storing the received electric power within a specified capacity range, which is set in advance, and capable of supplying the stored electric power to the electric motor 5. The power supply unit 6 controls the electric power that is supplied from the power storage device to the electric motor 5, and thereby controls the rotary torque that acts as an acceleration force to accelerate rotation of the electric motor 5. In this way, the power supply unit 6 can make the electric motor 5 function as the drive source of the two-wheeled motor vehicle 10. In addition, when making the electric motor 5 function as the generator by using the rotary power of the rear wheel 4, the power supply unit 6 controls the electric power for charging the power storage device that serves as an electric load on the electric motor 5. In this way, by controlling the electric power that is generated by the electric motor 5, the power supply unit 6 can control regenerative torque that is generated in conjunction with the power generation in the electric motor 5 and acts as rotation resistance. The regenerative torque acts as a regenerative braking force that is generated on the rear wheel 4 by the brake system 100, which will be described below.

As it has been described so far, the two-wheeled motor vehicle 10 in this embodiment is the straddle-type vehicle of a rear-wheel-drive type in which the electric motor 5 is actuated when being supplied with the electric power from the power supply unit 6 and drives the rear wheel 4.

Here, the power supply unit 6 may be configured to supply the electric power from the power supply unit 6 to the electric motor 5 via a power converter (for example, an inverter, a voltage converter, or the like), or may be configured to supply the electric power from the power supply unit 6 to the electric motor 5 without interposing the power converter. For example, the power supply unit 6 may be configured to include a power generation device (for example, a power generation device that is driven by a fuel cell or an internal combustion engine to generate the electric power, or the like) together with the power storage device and supply the electric power to the electric motor 5 from the power storage device and the power generation device. Alternatively, the power supply unit 6 may include the internal combustion engine as a drive source of the rear wheel 4.

### <Regarding Brake System>

As illustrated in Fig. 1 to Fig. 4, the brake system 100 includes: a first operation element 11a and a second operation element 11b, each of which is operated by a rider of the two-wheeled motor vehicle 10; the front-wheel braking section 20 that brakes the front wheel 3; the rear-wheel braking section 40 that brakes the rear wheel 4; and a controller (ECU) 60 (see Fig. 4) that controls braking forces for braking the front wheel 3 and the rear wheel 4.

As illustrated in Fig. 1 and Fig. 2, each of the first operation element 11a and the second operation element 11b is configured as a brake lever that is provided to the handlebar 2, and is operated by the rider's hand. The first operation element 11a is provided with a first master cylinder 23a, to which motion of the first operation element 11a is transmitted. The first master cylinder 23a and a first friction brake mechanism 21a in the front-wheel braking section 20, which will be described below, are connected by a brake fluid pipe 25a that is filled with a brake fluid. The first operation element 11a is hydraulically connected to the first friction brake mechanism 21a. A hydraulic pressure that corresponds to an operation of the first operation element 11a by the rider is generated by the first master cylinder 23a, and is transmitted to the first friction brake mechanism 21a via the brake fluid pipe 25a.

In addition, the second operation element 11b is provided with a second master cylinder 23b, to which motion of the second operation element 11b is transmitted. The second master cylinder 23b and a second friction brake mechanism 21b in the front-wheel braking section 20, which will be described below, are connected by a brake fluid pipe 26a that is filled with the brake fluid. The second operation element 11b is hydraulically connected to the second friction brake mechanism 21b. A hydraulic pressure that corresponds to an operation of the second operation element 11b by the rider is generated by the second master cylinder 23b, and is transmitted to the second friction brake mechanism 21b via the brake fluid pipe 26a.

The front-wheel braking section 20 includes: a friction application section 22 that applies a friction force to the front wheel 3; and the first friction brake mechanism 21a and the second friction brake mechanism 21b, each of which executes control for generating the braking force by the friction application section 22.

The first friction brake mechanism 21a includes the first master cylinder 23a, a first reservoir 24a, fluid paths 25a to 25e, a first wheel cylinder 27a, and the hydraulic pressure adjustment unit 30. The second friction brake mechanism 21b includes the second master cylinder 23b, a second reservoir 24b, fluid paths 26a to 26e, a second wheel cylinder 27b, and the hydraulic pressure adjustment unit 30.

The first friction brake mechanism 21a presses a friction member 22a (not illustrated) of the friction application section 22, which is held by the trunk 1, against a first disc rotor 3a, which rotates with the front wheel 3, applies the friction force corresponding to an operation amount of the first operation element 11a to the front wheel 3, and thereby generates and increases a friction braking force acting on the front wheel 3. The friction application section 22 includes the first wheel cylinder 27a that is hydraulically connected to the first friction brake mechanism 21a and receives the hydraulic pressure of the brake fluid generated by the first master cylinder 23a according to the motion transmitted from the first operation element 11a. In addition, the friction application section 22 is configured to press the friction member 22a against the first disc rotor 3a according to an increase in the hydraulic pressure when the hydraulic pressure of the brake fluid in the first wheel cylinder 27a is increased, and is configured to separate the friction member 22a from the first disc rotor 3a according to a reduction in the hydraulic pressure when the hydraulic pressure of the brake fluid in the first wheel cylinder 27a is reduced. In this way, the friction application section 22 generates and increases or reduces and eliminates the friction force, which corresponds to the operation amount of the first operation element 11a, to or from the first disc rotor 3a, so as to generate the braking force to the front wheel 3. However, the friction application section 22 may have another structure. For example, the friction application section 22 may be configured to press the friction member, such as a brake shoe held by the trunk 1, against a brake drum, which rotates with the front wheel 3, and thereby generate the friction force corresponding to an operation amount of an operation element 11.

The first friction brake mechanism 21a includes: the first master cylinder 23a, to which the motion of the first operation element 11a is transmitted; the first reservoir 24a that is attached to the first master cylinder 23a; the first wheel cylinder 27a that communicates with the first master cylinder 23a via the fluid paths 25a to 25e, each of which is filled with the brake fluid, and is provided to the friction application section 22; the brake fluid pipe 25a that partially constitutes the fluid paths 25a to 25e, and one end of which is connected to the first master cylinder 23a; a brake fluid pipe 25b that partially constitutes the fluid paths 25a to 25e, and one end of which is connected to the first wheel cylinder 27a; and the hydraulic pressure adjustment unit 30 that is connected to the other end of the brake fluid pipe 25a and the other end of the brake fluid pipe 25b. The hydraulic pressure adjustment unit 30 may directly be connected to the first master cylinder 23a without using the brake fluid pipe 25a, and the hydraulic pressure adjustment unit 30 may directly be connected to the first wheel cylinder 27a without using the brake fluid pipe 25b. In addition, the hydraulic pressure adjustment unit 30 may be unitized with the first master cylinder 23a or the first wheel cylinder 27a.

The second friction brake mechanism 21b presses a friction member 22b, which differs from the friction member 22a, in the friction application section 22 against a second disc rotor 3b, which rotates with the front wheel 3 and differs from the first disc rotor 3a, applies the friction force corresponding to an operation amount of the second operation element 11b to the front wheel 3, and thereby generates and increases the friction braking force acting on the front wheel 3. The friction application section 22 includes the second wheel cylinder 27b that is hydraulically connected to the second friction brake mechanism 21b and receives the hydraulic pressure of the brake fluid generated by the second master cylinder 23b according to the motion transmitted from the second operation element 11b. In addition, the friction application section 22 is configured to press the friction member 22b against the second disc rotor 3b according to the increase in the hydraulic pressure when the hydraulic pressure of the brake fluid in the second wheel cylinder 27b is increased, and is configured to separate the friction member 22b from the second disc rotor 3b according to the reduction in the hydraulic pressure when the hydraulic pressure of the brake fluid in the second wheel cylinder 27b is reduced. In this way, the friction application section 22 generates and increases or reduces and eliminates the friction force, which corresponds to the operation amount of the second operation element 11b, to or from the second disc rotor 3b, so as to generate the braking force to the front wheel 3.

The second friction brake mechanism 21b includes: the second master cylinder 23b, to which the motion of the second operation element 11b is transmitted; the second reservoir 24b that is attached to the second master cylinder 23b; the second wheel cylinder 27b that communicates with the second master cylinder 23b via the fluid paths 26a to 26e, each of which is filled with the brake fluid, and is provided to the friction application section 22; the brake fluid pipe 26a that partially constitutes the fluid paths 26a to 26e, and one end of which is connected to the second master cylinder 23b; a brake fluid pipe 26b that partially constitutes the fluid paths 26a to 26e, and one end of which is connected to the second wheel cylinder 27b; and the hydraulic pressure adjustment unit 30 that is connected to the other end of the brake fluid pipe 26a and the other end of the brake fluid pipe 26b. The hydraulic pressure adjustment unit 30 may directly be connected to the second master cylinder 23b without using the brake fluid pipe 26a, and the hydraulic pressure adjustment unit 30 may directly be connected to the second wheel cylinder 27b without using the brake fluid pipe 26b. In addition, the hydraulic pressure adjustment unit 30 may be unitized with the second master cylinder 23b or the second wheel cylinder 27b.

As illustrated in Fig. 2 and Fig. 4, the hydraulic pressure adjustment unit 30 includes a base body 31. The base body 31 is formed with: a master cylinder port MPa to which the brake fluid pipe 25a constituting the first friction brake mechanism 21a is connected; a wheel cylinder port WPa to which the brake fluid pipe 25b is connected; a primary fluid path 25c as an internal fluid path that partially constitutes the fluid paths 25a to 25e and connects between the master cylinder port MPa and the wheel cylinder port WPa; and a secondary fluid path 25d as an internal fluid path that partially constitutes the fluid paths 25a to 25e and bypasses the primary fluid path 25c. In addition, the base body 31 is formed with: a master cylinder port MPb to which the brake fluid pipe 26a constituting the second friction brake mechanism 21b is connected; a wheel cylinder port WPb to which the brake fluid pipe 26b is connected; a primary fluid path 26c as an internal fluid path that partially constitutes the fluid paths 26a to 26e and connects between the master cylinder port MPb and the wheel cylinder port WPb; and a secondary fluid path 26d as an internal fluid path that partially constitutes the fluid paths 26a to 26e and bypasses the primary fluid path 26c.

An inlet valve 32a is provided to an intermediate portion of the primary fluid path 25c that constitutes the first friction brake mechanism 21a. The secondary fluid path 25d is sequentially provided with an outlet valve 33a, a first accumulator 34a for storing the brake fluid, and a pump 35a from an upstream side. An upstream end of the secondary fluid path 25d is connected to a portion of the primary fluid path 25c on a wheel cylinder port WPa side from the inlet valve 32a. A downstream end of the secondary fluid path 25d is connected to a portion of the primary fluid path 25c on a master cylinder port MPa side from the inlet valve 32a. Meanwhile, an inlet valve 32b is provided to an intermediate portion of the primary fluid path 26c that constitutes the second friction brake mechanism 21b. The secondary fluid path 26d is sequentially provided with an outlet valve 33b, a second accumulator 34b, and a pump 35b from the upstream side. An upstream end of the secondary fluid path 26d is connected to a portion of the primary fluid path 26c on a wheel cylinder port WPb side from the inlet valve 32b. A downstream end of the secondary fluid path 26d is connected to a portion of the primary fluid path 26c on a master cylinder port MPb side from the inlet valve 32b.

As illustrated in Fig. 4, the pump 35a and the pump 35b are driven by a common motor 36. The inlet valves 32a, 32b, the outlet valves 33a, 33b, the first accumulator 34a, the second accumulator 34b, the pump 35a, the pump 35b, and the motor 36 are assembled to the common base body 31. A housing 37 for accommodating at least a part of the controller 60 is attached to the base body 31.

Each of the inlet valves 32a, 32b is an electromagnetic valve that is switched from being opened to being closed and thereby blocks a flow of the brake fluid at an installation position thereof when being brought from an unenergized state into an energized state by the controller 60, for example. The outlet valve 33a is an electromagnetic valve that is switched from being closed to being opened and thereby allows the flow of the brake fluid toward the pump 35a via an installation position thereof when being brought from the unenergized state into the energized state by the controller 60, for example. The outlet valve 33b is an electromagnetic valve that is switched from being closed to being opened and thereby allows the flow of the brake fluid toward the pump 35b via an installation position thereof when being brought from the unenergized state into the energized state by the controller 60, for example.

When the inlet valve 32a and the outlet valve 33a, which constitute the first friction brake mechanism 21a, are controlled in the energized state, in the hydraulic pressure adjustment unit 30, the inlet valve 32a is brought into the closed state and blocks the fluid path, through which the hydraulic pressure of the brake fluid is supplied from the first master cylinder 23a to the first wheel cylinder 27a, and the outlet valve 33a is brought into the open state to form the fluid path, through which the hydraulic pressure of the brake fluid moves from the first wheel cylinder 27a into the first accumulator 34a in the secondary fluid path 25d. In this way, the hydraulic pressure of the brake fluid in the first wheel cylinder 27a is released to the first accumulator 34a, and the hydraulic pressure of the brake fluid in the first wheel cylinder 27a is reduced.

Meanwhile, when the inlet valve 32b and the outlet valve 33b, which constitute the second friction brake mechanism 21b, are controlled in the energized state, in the hydraulic pressure adjustment unit 30, the inlet valve 32b is brought into the closed state and blocks the fluid path, through which the hydraulic pressure of the brake fluid is supplied from the second master cylinder 23b to the second wheel cylinder 27b, and the outlet valve 33b is brought into the open state to form the fluid path, through which the hydraulic pressure of the brake fluid moves from the second wheel cylinder 27b into the second accumulator 34b in the secondary fluid path 26d. In this way, the hydraulic pressure of the brake fluid in the second wheel cylinder 27b is released to the second accumulator 34b, and the hydraulic pressure of the brake fluid in the second wheel cylinder 27b is reduced.

In addition, in the hydraulic pressure adjustment unit 30, when the pump 35a is driven in a state where a switching valve 38a, which will be described below, is controlled in an unenergized state, the hydraulic pressure of the brake fluid in the first accumulator 34a can move and return to the first master cylinder 23a and the first reservoir 24a. Furthermore, when the pump 35b is driven in a state where a switching valve 38b is controlled in an unenergized state, the hydraulic pressure of the brake fluid in the second accumulator 34b can move and return to the second master cylinder 23b and the second reservoir 24b.

The base body 31 is formed with a booster fluid path 25e. The booster fluid path 25e is an internal flow path that connects between the master cylinder port MPa side of the primary fluid path 25c, which constitutes the first friction brake mechanism 21a, from a merging portion between the primary fluid path 25c and the downstream end of the secondary fluid path 25d and a portion of the secondary fluid path 25d between the first accumulator 34a and the pump 35a. The switching valve 38a is provided between a merging portion of the primary fluid path 25c with the booster fluid path 25e and the merging portion of the primary fluid path 25c with the downstream end of the secondary fluid path 25d. A booster regulator 39a is provided to an intermediate portion of the booster fluid path 25e. In addition, a booster fluid path 26e is formed as an internal flow path that connects between the master cylinder port MPb side of the primary fluid path 26c, which constitutes the second friction brake mechanism 21b, from a merging portion between the primary fluid path 26c and the downstream end of the secondary fluid path 26d and a portion of the secondary fluid path 26d between the second accumulator 34b and the pump 35b. The switching valve 38b is provided between a merging portion of the primary fluid path 26c with the booster fluid path 26e and a merging portion of the primary fluid path 26c with the downstream end of the secondary fluid path 26d. A booster regulator 39b is provided to an intermediate portion of the booster fluid path 26e.

Each of the switching valves 38a, 38b is an electromagnetic valve that is switched from being opened to being closed and thereby blocks the flow of the brake fluid at an installation position thereof when being brought from the unenergized state into the energized state by the controller 60, for example. The booster regulator 39a is an electromagnetic valve that is switched from being closed to being opened and thereby allows the flow of the brake fluid toward the pump 35a via an installation position thereof when being brought from the unenergized state into the energized state by the controller 60, for example. The booster regulator 39b is an electromagnetic valve that is switched from being closed to being opened and thereby allows the flow of the brake fluid toward the pump 35b via an installation position thereof when being brought from the unenergized state into the energized state by the controller 60, for example.

When the inlet valve 32a and the outlet valve 33a, which constitute the first friction brake mechanism 21a, are controlled in the unenergized state, and the switching valve 38a and the booster regulator 39a are controlled in the energized state, in the hydraulic pressure adjustment unit 30, the outlet valve 33a and the switching valve 38a are brought into the closed state. In this way, a fluid path, through which the hydraulic pressure of the brake fluid returns from the first master cylinder 23a to the first wheel cylinder 27a via these outlet valve 33a and switching valve 38a, is blocked. Meanwhile, the inlet valve 32a and the booster regulator 39a are brought into the open state. Thus, a fluid path, through which the hydraulic pressure of the brake fluid moves from the first reservoir 24a to the first wheel cylinder 27a via these inlet valve 32a, booster regulator 39a, and pump 35a, is formed. Then, the pump 35a is controlled in a driven state. As a result, the hydraulic pressure of the brake fluid moves from the first reservoir 24a to the first wheel cylinder 27a, and the hydraulic pressure in the first wheel cylinder 27a is increased. In the hydraulic pressure adjustment unit 30, when the hydraulic pressure in the first wheel cylinder 27a is increased by the pump 35a, it is possible to increase the hydraulic pressure in the first wheel cylinder 27a to be higher than the hydraulic pressure that corresponds to the operation amount of the first operation element 11a by the rider's operation.

When the inlet valve 32b and the outlet valve 33b, which constitute the second friction brake mechanism 21b, are controlled in the unenergized state, and the switching valve 38b and the booster regulator 39b are controlled in the energized state, in the hydraulic pressure adjustment unit 30, the outlet valve 33b and the switching valve 38b are brought into the closed state. In this way, a fluid path, through which the hydraulic pressure of the brake fluid returns from the second master cylinder 23b to the second wheel cylinder 27b via these outlet valve 33b and switching valve 38b, is blocked. Meanwhile, the inlet valve 32b and the booster regulator 39b are brought into the open state. Thus, a fluid path, through which the hydraulic pressure of the brake fluid moves from the second reservoir 24b to the second wheel cylinder 27b via these inlet valve 32b, booster regulator 39b, and pump 35b, is formed. Then, the pump 35b is controlled in the driven state. As a result, the hydraulic pressure of the brake fluid moves from the second reservoir 24b to the second wheel cylinder 27b, and the hydraulic pressure in the second wheel cylinder 27b is increased. In the hydraulic pressure adjustment unit 30, when the hydraulic pressure in the second wheel cylinder 27b is increased by the pump 35b, it is possible to increase the hydraulic pressure in the second wheel cylinder 27b to be higher than the hydraulic pressure that corresponds to the operation amount of the second operation element 11b by the rider's operation.

In the hydraulic pressure adjustment unit 30, a first brake hydraulic pressure sensor 82a, which detects the hydraulic pressure of the brake fluid in the first master cylinder 23a, is provided to an area on a first master cylinder 23a side from the switching valve 38a in the primary fluid path 25c, and a second brake hydraulic pressure sensor 83a, which detects the hydraulic pressure of the brake fluid in the first wheel cylinder 27a, is provided to an area on a first wheel cylinder 27a side from the inlet valve 32a in the primary fluid path 25c. Meanwhile, a first brake hydraulic pressure sensor 82b, which detects the hydraulic pressure of the brake fluid in the second master cylinder 23b, is provided to an area on a second master cylinder 23b side from the switching valve 38b in the primary fluid path 26c, and a second brake hydraulic pressure sensor 83b, which detects the hydraulic pressure of the brake fluid in the second wheel cylinder 27b, is provided to an area on a second wheel cylinder 27b side from the inlet valve 32b in the primary fluid path 26c.

The first master cylinder 23a, the first reservoir 24a, the fluid paths 25a to 25e, the first wheel cylinder 27a, and the hydraulic pressure adjustment unit 30 correspond to the first friction brake mechanism in the invention. The friction application section 22, the second master cylinder 23b, the second reservoir 24b, the fluid paths 26a to 26e, the second wheel cylinder 27b, and the hydraulic pressure adjustment unit 30 correspond to the second friction brake mechanism in the invention. In addition, the friction application section 22 including the friction members 22a, 22b corresponds to the friction application section in the invention.

As illustrated in Fig. 3, the rear-wheel braking section 40 includes a regenerative brake mechanism that generates a regenerative braking force on the rear wheel 4. The regenerative brake mechanism includes the electric motor 5 that functions as the generator. It is configured that, when being actuated as the generator by the rotary power of the rear wheel 4, the electric motor 5 generates and applies the regenerative torque to the rear wheel 4 and that the regenerative torque is used to generate the regenerative braking force for braking the rear wheel 4. In the electric motor 5, when the rotational shaft of the electric motor 5 rotates by the rotary power of the rear wheel 4, an induced electromotive force is generated, and the regenerative torque, which corresponds to a current flowing toward the power storage device, is then generated in an opposite direction from a rotational direction of the rear wheel 4 by the induced electromotive force, and acts to decelerate the rotation of the rear wheel 4. By using this action, the electric motor 5 functions as the part of the brake system 100 and brakes the rear wheel 4 by the regenerative torque generated by the electric motor 5 without including the friction brake mechanism, which generates the braking force by applying the friction force to the rear wheel 4 like the first friction brake mechanism 21a and the second friction brake mechanism 21b described above. The electric motor 5 that functions as the generator corresponds to the regenerative brake mechanism in the invention.

As illustrated in Fig. 5, the controller 60 includes: a first control section 61 that controls operation of the inlet valve 32a, the outlet valve 33a, the switching valve 38a, the booster regulator 39a, and the motor 36 constituting the first friction brake mechanism 21a provided to the front-wheel braking section 20, and controls operation of the inlet valve 32b, the outlet valve 33b, the switching valve 38b, and the booster regulator 39b constituting the second friction brake mechanism 21b provided thereto; a second control section 62 that controls operation of the electric motor 5 as the generator provided to the rear-wheel braking section 40; an acquisition section 63 that acquires abnormality information on abnormality of each of the first friction brake mechanism 21a and the second friction brake mechanism 21b in the front-wheel braking section 20; and an execution section 64 that executes control of the switching valves 38a, 38b, the booster regulators 39a, 39b, and the motor 36 as actuators on the basis of the abnormality information. The first control section 61, the second control section 62, the acquisition section 63, and the execution section 64 may be provided as one unit or may be divided into multiple units. Each of the first control section 61, and the second control section 62, the acquisition section 63, and the execution section 64 may partially or entirely be a hardware resource such as a microcomputer or a microprocessor unit, may partially or entirely be a software resource such as a program, or may partially or entirely be a program module or the like that is executed by a command from a CPU or the like, for example.

The controller 60 receives output signals from a front wheel rotational frequency sensor 81, the first brake hydraulic pressure sensors 82a, 82b, the second brake hydraulic pressure sensors 83a, 83b, a rear wheel rotational frequency sensor 91, a stored power remaining amount sensor 92, a surrounding environment sensor 93, and the like in a wired or wireless manner, for example. The controller 60 may receive the output signals from other sensors. The controller 60 derives a target braking force to be generated on each of the front wheel 3 and the rear wheel 4 on the basis of the output signals from those sensors. The first control section 61 outputs a command signal, which corresponds to the target braking force to be generated on the front wheel 3 by the first friction brake mechanism 21a, to the inlet valve 32a, the outlet valve 33a, the switching valve 38a, the booster regulator 39a, and a driver in the motor 36, which constitute the first friction brake mechanism 21a, in the wired or wireless manner. In addition, the first control section 61 outputs a command signal, which corresponds to the target braking force to be generated on the front wheel 3 by the second friction brake mechanism 21b, to the inlet valve 32b, the outlet valve 33b, the switching valve 38b, and a driver in the booster regulator 39b, which constitute the second friction brake mechanism 21b, in the wired or wireless manner. Meanwhile, the second control section 62 outputs a command signal, which corresponds to the target braking force to be generated on the rear wheel 4, to the controller, which controls the electric power for charging the power storage device, in the wired or wireless manner.

The front wheel rotational frequency sensor 81 detects a rotational frequency of the front wheel 3. The front wheel rotational frequency sensor 81 is held by the trunk 1, for example. The front wheel rotational frequency sensor 81 may detect another physical quantity that can substantially be converted to the rotational frequency of the front wheel 3.

The first brake hydraulic pressure sensor 82a detects the hydraulic pressure of the brake fluid in the first master cylinder 23a. The first brake hydraulic pressure sensor 82a is provided to the area on the first master cylinder 23a side from the switching valve 38a in the primary fluid path 25c on a front wheel 3 side (see Fig. 2). The first brake hydraulic pressure sensor 82b detects the hydraulic pressure of the brake fluid in the second master cylinder 23b. The first brake hydraulic pressure sensor 82b is provided to an area on the second master cylinder 23b side from the switching valve 38b in the primary fluid path 26c on the front wheel 3 side (see Fig. 2). However, each of the first brake hydraulic pressure sensors 82a, 82b may detect another physical quantity (for example, the operation amount of the first operation element 11a, the operation amount of the second operation element 11b, displacement of the first operation element 11a, displacement of the second operation element 11b, displacement of a piston in the first master cylinder 23a, displacement of a piston in the second master cylinder 23b, or the like) that can substantially be converted to the hydraulic pressure of the brake fluid in respective one of the first master cylinder 23a and the second master cylinder 23b.

The second brake hydraulic pressure sensor 83a detects the hydraulic pressure of the brake fluid in the first wheel cylinder 27a. The second brake hydraulic pressure sensor 83a is provided to the area on the first wheel cylinder 27a side from the inlet valve 32a in the primary fluid path 25c on the front wheel 3 side (see Fig. 2). The second brake hydraulic pressure sensor 83b detects the hydraulic pressure of the brake fluid in the second wheel cylinder 27b. The second brake hydraulic pressure sensor 83b is provided to the area on the second wheel cylinder 27b side from the inlet valve 32b in the primary fluid path 26c on the front wheel 3 side (see Fig. 2). However, each of the second brake hydraulic pressure sensors 83a, 83b may detect another physical quantity (for example, displacement of respective one of the friction members 22a, 22b in the friction application section 22, or the like) that can substantially be converted to the hydraulic pressure of the brake fluid in respective one of the first wheel cylinder 27a and the second wheel cylinder 27b.

The rear wheel rotational frequency sensor 91 detects a rotational frequency of the rear wheel 4. The rear wheel rotational frequency sensor 91 is held by the trunk 1, for example. The rear wheel rotational frequency sensor 91 may detect another physical quantity that can substantially be converted to the rotational frequency of the rear wheel 4.

The stored power remaining amount sensor 92 detects a remaining power amount that is stored in the power storage device provided to the power supply unit 6. The stored power remaining amount sensor 92 may be any sensor as long as the stored power remaining amount sensor 92 detects a physical quantity (for example, a voltage value of the battery provided to the power storage device, a current value input/output to/from the power storage device, or the like), to which the power amount stored in the power storage device or a free capacity for storing the electric power in the power storage device is reflected.

The surrounding environment sensor 93 detects environment around the two-wheeled motor vehicle 10 (for example, a road surface condition in an advancing direction of the two-wheeled motor vehicle 10, another vehicle, and the like). The surrounding environment sensor 93 may be any device (for example, a camera, an ultrasonic sensor, a radar device, an external communication device, or the like) as long as the surrounding environment sensor 93 detects information, to which the environment around the two-wheeled motor vehicle 10 is reflected.

In this embodiment, the hydraulic pressure adjustment unit 30 is configured to include: the first brake hydraulic pressure sensors 82a, 82b that respectively detect the hydraulic pressures of the brake fluid in the first master cylinder 23a and the second master cylinder 23b; and the second brake hydraulic pressure sensors 83a, 83b that detect the hydraulic pressures of the brake fluid in the first wheel cylinder 27a and the second wheel cylinder 27b. However, the hydraulic pressure adjustment unit 30 may be configured to only include either pair of the first brake hydraulic pressure sensors 82a, 82b and the second brake hydraulic pressure sensors 83a, 83b. For example, the hydraulic pressure adjustment unit 30 may be configured to only include the first brake hydraulic pressure sensors 82a, 82b and to estimate the hydraulic pressures of the brake fluid in the first wheel cylinder 27a and the second wheel cylinder 27b on the basis of the hydraulic pressures detected by the first brake hydraulic pressure sensors 82a, 82b or other physical quantities that can substantially be converted to the hydraulic pressures of the brake fluid in the first master cylinder 23a and the second master cylinder 23b. Alternatively, for example, the hydraulic pressure adjustment unit 30 may be configured to only include the second brake hydraulic pressure sensors 83a, 83b and to estimate the hydraulic pressures of the brake fluid in the first master cylinder 23a and the second master cylinder 23b on the basis of the hydraulic pressures detected by the second brake hydraulic pressure sensors 83a, 83b or other physical quantities that can substantially be converted to the hydraulic pressures of the brake fluid in the first wheel cylinder 27a and the second wheel cylinder 27b. Further alternatively, the hydraulic pressure adjustment unit 30 may be configured to include neither the first brake hydraulic pressure sensors 82a, 82b nor the second brake hydraulic pressure sensors 83a, 83b, to estimate the hydraulic pressures of the brake fluid in the first wheel cylinder 27a and the second wheel cylinder 27b on the basis of the other physical quantities that can substantially be converted to the hydraulic pressures of the brake fluid in the first master cylinder 23a and the second master cylinder 23b, and to estimate the hydraulic pressures of the brake fluid in the first master cylinder 23a and the second master cylinder 23b on the basis of the other physical quantities that can substantially be converted to the hydraulic pressures of the brake fluid in the first wheel cylinder 27a and the second wheel cylinder 27b.

The first control section 61, the second control section 62, the acquisition section 63, and the execution section 64 are accommodated in the housing 37 of the hydraulic pressure adjustment unit 30, and are unitized with a hydraulic pressure adjustment mechanism (for example, the inlet valves 32a, 32b, the outlet valves 33a, 33b, the motor 36, the switching valves 38a, 38b, the booster regulators 39a, 39b, and the like). With such a configuration, a sealing structure can be shared among the first control section 61, the second control section 62, the acquisition section 63, and the execution section 64, and thus cost-effectiveness of the brake system 100 can be improved.

The second control section 62 may be unitized with the electric motor 5 and the power supply unit 6. With such a configuration, the front-wheel braking section 20 and the rear-wheel braking section 40 can separately be managed. As a result, it is possible to improve maintainability, a retrofit property, and the like of the brake system 100.

When the rider operates the operation element 11 in a state where the two-wheeled motor vehicle 10 is stopped or the two-wheeled motor vehicle 10 travels while a slippage exceeding a reference value does not occur to the front wheel 3 or the rear wheel 4, that is, during service braking, the first control section 61 controls the inlet valves 32a, 32b, the outlet valves 33a, 33b, the switching valves 38a, 38b, and the booster regulators 39a, 39b in the unenergized state, and controls the motor 36 in an undriven state. When the rider operates at least one of the first operation element 11a and the second operation element 11b in this state, the piston (not illustrated) in at least one of the first master cylinder 23a and the second master cylinder 23b is pressed in response to the motion of at least one of the first operation element 11a and the second operation element 11b, so as to increase the hydraulic pressure of the brake fluid in at least one of the first wheel cylinder 27a and the second wheel cylinder 27b, and at least one of the friction members 22a, 22b of the friction application section 22 is pressed against at least one of the first disc rotor 3a and the second disc rotor 3b. As a result, the friction braking force that is applied to the front wheel 3 is generated or increased. Then, when the rider releases the first operation element 11a or the second operation element 11b, the piston (not illustrated) in the first master cylinder 23a or the second master cylinder 23b returns in response to the motion of the first operation element 11a or the second operation element 11b, so as to reduce the hydraulic pressure of the brake fluid in the first wheel cylinder 27a or the second wheel cylinder 27b, and either one of the friction members 22a, 22b of the friction application section 22 separates from the first disc rotor 3a or the second disc rotor 3b. As a result, the friction braking force that is applied to the front wheel 3 is reduced or eliminated. That is, during the service braking, in the front-wheel braking section 20, the friction braking force, which is applied to the front wheel 3 by the friction application section 22, varies according to a change in the hydraulic pressure of the brake fluid in the first master cylinder 23a or the second master cylinder 23b respectively corresponding to the motion of the first operation element 11a or the second operation element 11b.

When the rider operates the first operation element 11a and/or the second operation element 11b, the controller 60 executes interlocking brake control, in which control for applying the regenerative braking force to the rear wheel 4 by the rear-wheel braking section 40 is executed and control for applying the friction braking force to the front wheel 3 by the front-wheel braking section 20 is executed.

In the interlocking brake control, the controller 60 acquires, for example: the braking force that is requested by the rider on the basis of the operation amount of at least one of the first operation element 11a and the second operation element 11b (hereinafter may also be referred to as a requested braking force); travel information (for example, a speed, a tilt of a vehicle body, and the like) on a travel state of the two-wheeled motor vehicle 10; and capacity information on available capacity for storing the electric power in the power storage device of the power supply unit 6. Then, the controller 60 acquires the regenerative braking force, which can be generated by the electric motor 5 as the regenerative brake mechanism, on the basis of the travel information and the capacity information, and compares the regenerative braking force with the requested braking force. In the case where it is determined that the requested braking force exceeds the regenerative braking force, the controller 60 executes control for causing each of the first friction brake mechanism 21a and the second friction brake mechanism 21b to generate the braking force, an amount of which is acquired by subtracting the regenerative braking force from the requested braking force, as the friction braking force, and executes control for causing the electric motor 5 to generate the regenerative braking force. For example, the first control section 61 divides a task of generating the braking force by the front-wheel braking section 20 evenly to the first friction brake mechanism 21a and the second friction brake mechanism 21b, and causes each of the mechanisms to generate the braking force.

In addition, in the interlocking brake control, the controller 60 acquires the target braking force of the front-wheel braking section 20 and the target braking force of the rear-wheel braking section 40 at the time when the requested braking force is divided at a specified ratio (for example, a ratio between the braking force on the front wheel 3 and the braking force on the rear wheel 4 that does not hinder travel stability of the two-wheeled motor vehicle 10, or the like) on the basis of the travel state of the two-wheeled motor vehicle 10, for example.

Then, the first control section 61 acquires information on the regenerative braking force that can be generated on the basis of a power storage status in the power supply unit 6, and compares the target braking force of the rear-wheel braking section 40 with the regenerative braking force that can be generated by the rear-wheel braking section 40. In the case where the target braking force of the rear-wheel braking section 40 falls within a range of the regenerative braking force that can be generated by the rear-wheel braking section 40, the first control section 61 executes friction braking force control for generating the target braking force of the front-wheel braking section 20 as the friction braking forces of the first friction brake mechanism 21a and the second friction brake mechanism 21b. On the other hand, in the case where the target braking force of the rear-wheel braking section 40 exceeds the range of the regenerative braking force that can be generated by the rear-wheel braking section 40, the first control section 61 executes the friction braking force control for generating, in addition to the target braking force of the front-wheel braking section 20, a braking force, which is a difference between the target braking force of the rear-wheel braking section 40 and the regenerative braking force capable of being generated by the rear-wheel braking section 40, (hereinafter may also be referred to as a deficient braking force) as the friction braking forces of the first friction brake mechanism 21a and the second friction brake mechanism 21b.

More specifically, in the friction braking force control, for example, the inlet valves 32a, 32b, the outlet valves 33a, 33b, and the switching valves 38a, 38b are controlled in the energized state, the booster regulators 39a, 39b are controlled in the unenergized state, and the motor 36 is controlled in the driven state. By such control, the hydraulic pressure of the brake fluid in the first wheel cylinder 27a, which is supplied from the first master cylinder 23a by the motion of the first operation element 11a, and the hydraulic pressure of the brake fluid in the second wheel cylinder 27b, which is supplied from the second master cylinder 23b by the motion of the second operation element 11b, are released within a specified range, and the hydraulic pressure in the first master cylinder 23a and the hydraulic pressure in the second master cylinder 23b are thereby reduced to a specified value. In this way, the friction application section 22 generates the target braking force of the front-wheel braking section 20 and the friction force corresponding to the above-described deficient braking force. That is, in the front-wheel braking section 20, during execution of the interlocking brake control, the friction application section 22 applies the friction force to the front wheel 3 and generates the friction braking force in response to the motion of the first operation element 11a and the second operation element 11b.

Meanwhile, the second control section 62 controls the electric power for charging the power storage device within a range where the electric power can be generated on the basis of a travel status (for example, the speed, the tilt, and the like) of the two-wheeled motor vehicle 10 and the power storage status and within a range up to the target braking force of the rear-wheel braking section 40, for example, and thereby controls the regenerative brake mechanism to generate the regenerative braking force.

In friction braking control, in a state where the friction braking force that is applied to the front wheel 3 has to be increased, for example, in a state where the regenerative braking force that can be generated by the rear-wheel braking section 40 is reduced during execution of the friction braking control, or the like, the first control section 61 controls the inlet valves 32a, 32b and the outlet valves 33a, 33b in the unenergized state, controls the switching valves 38a, 38b and the booster regulators 39a, 39b in the energized state, and drives the motor 36 with a drive amount that corresponds to the output signals from the second brake hydraulic pressure sensors 83a, 83b. By increasing the hydraulic pressures of the brake fluid in the first wheel cylinder 27a and the second wheel cylinder 27b in such control, the first control section 61 executes control for increasing the friction braking force of the friction application section 22 and thereby compensating for a reduction in the regenerative braking force. That is, in the front-wheel braking section 20, during the execution of the interlocking brake control, the friction force that is applied to the front wheel 3 by the friction application section 22 is increased regardless of the motion of the operation element 11.

In addition, in the friction braking control, in a state where the friction braking force that is applied to the front wheel 3 has to be reduced, for example, in a state where the regenerative braking force that is generated by the rear-wheel braking section 40 is increased during the execution of the friction braking control, or the like, the first control section 61 controls the inlet valves 32a, 32b and the outlet valves 33a, 33b in the energized state, and drives the motor 36 with the drive amount that corresponds to the output signals from the first brake hydraulic pressure sensors 82a, 82b and the second brake hydraulic pressure sensors 83a, 83b. By reducing the hydraulic pressures of the brake fluid in the first wheel cylinder 27a and the second wheel cylinder 27b in such control, the first control section 61 reduces the friction force by the friction application section 22. That is, in the front-wheel braking section 20, during the execution of the interlocking brake control, the friction force that is applied to the front wheel 3 by the friction application section 22 is reduced regardless of the motion of the operation element 11.

By these types of the control, such control is executed that a total braking force generated by the brake system 100, that is, a sum of the friction braking force generated by the front-wheel braking section 20 and the regenerative braking force generated by the rear-wheel braking section 40 matches the requested braking force by the rider.

During the execution of the interlocking brake control, the controller 60 may execute lock control operation, slippage control operation, stop assistance control operation, and emergency braking control operation, which will be described below.

In the case where the two-wheeled motor vehicle 10 travels in a state where the front wheel 3 and/or the rear wheel 4 is locked or possibly locked, the controller 60 executes the lock control operation to suppress locking. The lock control operation includes operation to execute anti-lock brake control for each of the wheels. When executing the lock control operation, the controller 60 may control, in addition to the brake system 100, another system that is mounted to the two-wheeled motor vehicle 10. The controller 60 executes the lock control operation regardless of the motion of the operation element 11.

Locking or possible locking of the front wheel 3 and/or the rear wheel 4 of the two-wheeled motor vehicle 10 can be determined by a well-known method using the output signals from the front wheel rotational frequency sensor 81 and the rear wheel rotational frequency sensor 91.

During execution of the lock control operation, in the state where the friction braking force that is applied to the front wheel 3 has to be reduced, the first control section 61 controls the inlet valves 32a, 32b and the outlet valves 33a, 33b in the energized state, and drives the motor 36 with the drive amount that corresponds to the output signals from the first brake hydraulic pressure sensors 82a, 82b and the second brake hydraulic pressure sensors 83a, 83b. By such control, the hydraulic pressures of the brake fluid in the first wheel cylinder 27a and the second wheel cylinder 27b are reduced, and the friction members 22a, 22b of the friction application section 22 move away from the first disc rotor 3a and the second disc rotor 3b, respectively. That is, during the execution of the lock control operation, in the front-wheel braking section 20, the friction braking force that is applied to the front wheel 3 by the friction application section 22 varies by control of the inlet valves 32a, 32b, the outlet valves 33a, 33b, and the motor 36 by the controller 60 regardless of the motion of the first operation element 11a and the second operation element 11b. Here, instead of the output signals from the first brake hydraulic pressure sensors 82a, 82b and the output signals from the second brake hydraulic pressure sensors 83a, 83b, the command signals that the first control section 61 has transmitted to the inlet valves 32a, 32b, the outlet valves 33a, 33b, and the driver in the motor 36 immediately before the transmission of the output signals may be used.

During the execution of the lock control operation, in a state where the regenerative braking force that is applied to the rear wheel 4 has to be reduced, the second control section 62 reduces the electric power for charging the power storage device of the power supply unit 6. By such control, the second control section 62 reduces the electric load on the electric motor 5 that functions as the generator, so as to reduce the regenerative braking force generated by the electric motor 5. That is, during the execution of the lock control operation, in the rear-wheel braking section 40, the regenerative braking force that is applied to the rear wheel 4 by the electric motor 5 varies by control of the electric power for charging the power storage device regardless of the motion of the first operation element 11a and the second operation element 11b.

During the execution of the lock control operation, when the rear wheel 4 is locked or possibly locked by the regenerative braking force that is applied to the rear wheel 4, the first control section 61 controls the inlet valves 32a, 32b and the outlet valves 33a, 33b in the unenergized state, controls the switching valves 38a, 38b and the booster regulators 39a, 39b in the energized state, and drives the motor 36 with the drive amount that corresponds to the output signals from the second brake hydraulic pressure sensors 83a, 83b. By such control, the hydraulic pressures of the brake fluid in the first wheel cylinder 27a and the second wheel cylinder 27b are increased, and the friction members 22a, 22b of the friction application section 22 are thereby pressed against the first disc rotor 3a and the second disc rotor 3b, respectively. That is, during the execution of the lock control operation, in the front-wheel braking section 20, the friction braking force that is applied to the front wheel 3 by the friction application section 22 is generated or increased by control of the inlet valves 32a, 32b, the outlet valves 33a, 33b, the switching valves 38a, 38b, the booster regulators 39a, 39b, and the motor 36 by the controller 60 regardless of the motion of the first operation element 11a and the second operation element 11b. In this way, in the case where the regenerative braking force is reduced due to locking of the rear wheel 4, the reduction in the regenerative braking force can be compensated by the increase in the friction braking force on the front wheel.

In the case where the two-wheeled motor vehicle 10 travels in a state where the slippage exceeding the reference value occurs or possibly occurs to the front wheel 3 and/or the rear wheel 4, the controller 60 executes the slippage control operation to suppress the slippage. Examples of the slippage control operation are operation to execute the anti-lock brake control for each of the wheels, operation to execute wheel slippage suppression control for each of the wheels, and operation to execute sideslip suppression control for each of the wheels. When executing the slippage control operation, the controller 60 may control, in addition to the brake system 100, another system that is mounted to the two-wheeled motor vehicle 10. The controller 60 executes the slippage control operation regardless of the motion of the operation element 11.

The slippage or the possible slippage that occurs to the front wheel 3 and/or the rear wheel 4 of the two-wheeled motor vehicle 10 can be determined by the well-known method using the output signals from the front wheel rotational frequency sensor 81 and the rear wheel rotational frequency sensor 91.

During execution of the slippage control operation, in the state where the friction braking force that is applied to the front wheel 3 has to be reduced, the first control section 61 controls the inlet valves 32a, 32b and the outlet valves 33a, 33b in the energized state, and drives the motor 36 with the drive amount that corresponds to the output signals from the first brake hydraulic pressure sensors 82a, 82b and the second brake hydraulic pressure sensors 83a, 83b. By such control, the hydraulic pressures of the brake fluid in the first wheel cylinder 27a and the second wheel cylinder 27b are reduced, and the friction members 22a, 22b of the friction application section 22 move away from the first disc rotor 3a and the second disc rotor 3b, respectively. That is, during the execution of the slippage control operation, in the front-wheel braking section 20, the friction braking force that is applied to the front wheel 3 by the friction application section 22 varies by the control of the inlet valves 32a, 32b, the outlet valves 33a, 33b, and the motor 36 by the controller 60 regardless of the motion of the first operation element 11a and the second operation element 11b. Here, instead of the output signals from the first brake hydraulic pressure sensors 82a, 82b and the output signals from the second brake hydraulic pressure sensors 83a, 83b, the command signals that the first control section 61 has transmitted to the inlet valves 32a, 32b, the outlet valves 33a, 33b, and the driver in the motor 36 immediately before the transmission of the output signals may be used.

During the execution of the slippage control operation, in the state where the regenerative braking force that is applied to the rear wheel 4 has to be reduced, the second control section 62 reduces the electric power for charging the power storage device of the power supply unit 6. By such control, the electric load on the electric motor 5 that functions as the generator is reduced, so as to reduce the regenerative braking force generated by the electric motor 5. That is, during the execution of the slippage control operation, in the rear-wheel braking section 40, the regenerative braking force that is applied to the rear wheel 4 by the electric motor 5 varies by the control of the electric power for charging the power storage device regardless of the motion of the first operation element 11a and the second operation element 11b.

During the execution of the slippage control operation, in a state where the friction braking force that is applied to the front wheel 3 has to be generated or increased (for example, in a state where the rear wheel 4 slips or possibly slips by the regenerative braking force during turning travel of the two-wheeled motor vehicle 10, or the like), the first control section 61 controls the inlet valves 32a, 32b and the outlet valves 33a, 33b in the unenergized state, controls the switching valves 38a, 38b and the booster regulators 39a, 39b in the energized state, and drives the motor 36 with the drive amount that corresponds to the output signals from the second brake hydraulic pressure sensors 83a, 83b. By such control, the hydraulic pressures of the brake fluid in the first wheel cylinder 27a and the second wheel cylinder 27b are increased, and the friction members 22a, 22b of the friction application section 22 are thereby pressed against the first disc rotor 3a and the second disc rotor 3b, respectively. That is, during the execution of the slippage control operation, in the front-wheel braking section 20, the friction braking force that is applied to the front wheel 3 by the friction application section 22 is generated or increased by the control of the inlet valves 32a, 32b, the outlet valves 33a, 33b, the switching valves 38a, 38b, the booster regulators 39a, 39b, and the motor 36 by the controller 60 regardless of the motion of the first operation element 11a and the second operation element 11b. In this way, in the case where the regenerative braking force is reduced due to the slippage of the rear wheel 4, the reduction in the regenerative braking force can be compensated by the increase in the friction braking force on the front wheel. Here, instead of the output signals from the second brake hydraulic pressure sensors 83a, 83b, the command signals that the first control section 61 has transmitted to the inlet valves 32a, 32b, the outlet valves 33a, 33b, the switching valves 38a, 38b, the booster regulator 39a, 39b, and the driver in the motor 36 immediately before the transmission of the output signals may be used.

During the execution of the lock control operation or during the execution of the slippage control operation, in a state where the regenerative braking force that is applied to the rear wheel 4 has to be increased, the second control section 62 increases the electric power for charging the power storage device of the power supply unit 6. By such control, the electric load on the electric motor 5 that functions as the generator is increased, so as to increase the regenerative braking force generated by the electric motor 5. That is, during the execution of the slippage control operation, in the rear-wheel braking section 40, the regenerative braking force that is applied to the rear wheel 4 by the electric motor 5 varies by the control of the electric power for charging the power storage device regardless of the motion of the first operation element 11a and the second operation element 11b.

In the case where the rider operates the first operation element 11a and/or the second operation element 11b when the two-wheeled motor vehicle 10 comes to a stop or when the two-wheeled motor vehicle 10 is stopped, the controller 60 executes the stop assistance control operation to generate the braking force at least on the front wheel 3 and thereby assist with transition to or maintenance of the stopped state of the two-wheeled motor vehicle 10. When executing the stop assistance control operation, the controller 60 may control, in addition to the brake system 100, another system that is mounted to the two-wheeled motor vehicle 10. The stop assistance control operation is canceled, for example, when it is determined that the rider has released his/her hands from the first operation element 11a and/or the second operation element 11b and thereby terminates the operation, or the like.

During execution of the stop assistance control operation, in the case where the friction force that is applied to the front wheel 3 has to be increased (for example, in the case where the braking force that is based on the operation amounts of the first operation element 11a and the second operation element 11b falls below the braking force with which the stopped state of the two-wheeled motor vehicle 10 is maintained, or the like), the first control section 61 controls the inlet valves 32a, 32b and the outlet valves 33a, 33b in the unenergized state, controls the switching valves 38a, 38b and the booster regulators 39a, 39b in the energized state, and drives the motor 36 with the drive amount that corresponds to the output signals from the second brake hydraulic pressure sensors 83a, 83b. By such control, the hydraulic pressures of the brake fluid in the first wheel cylinder 27a and the second wheel cylinder 27b are increased, and the friction members 22a, 22b of the friction application section 22 are thereby pressed against the first disc rotor 3a and the second disc rotor 3b, respectively. That is, during the execution of the stop assistance control operation, in the front-wheel braking section 20, the friction braking force that is applied to the front wheel 3 by the friction application section 22 varies by the control of the inlet valves 32a, 32b, the outlet valves 33a, 33b, the switching valves 38a, 38b, the booster regulators 39a, 39b, and the motor 36 by the controller 60 regardless of the motion of the first operation element 11a and the second operation element 11b. Here, instead of the output signals from the second brake hydraulic pressure sensors 83a, 83b, the command signals that the first control section 61 has transmitted to the inlet valves 32a, 32b, the outlet valves 33a, 33b, the switching valves 38a, 38b, the booster regulator 39a, 39b, and the driver in the motor 36 immediately before the transmission of the output signals may be used. For example, during the execution of the stop assistance control operation, the regenerative braking force that is applied to the rear wheel 4 may be increased.

In the case where the two-wheeled motor vehicle 10 has to be decelerated or stopped urgently on the basis of information on a state of the environment around the two-wheeled motor vehicle 10, which is detected by the surrounding environment sensor 93, the controller 60 executes the emergency braking control operation to generate the friction braking force at least on the front wheel 3. When executing the emergency braking control operation, the controller 60 may control, in addition to the brake system 100, another system that is mounted to the two-wheeled motor vehicle 10. Alternatively, by executing the above-described interlocking brake control, the controller 60 may execute the control for dividing the braking force for urgently decelerating or stopping the two-wheeled motor vehicle 10 into the target braking force of the front-wheel braking section 20 and the target braking force of the rear-wheel braking section 40 and generating the braking force.

During execution of the emergency braking control operation, in the state where the friction braking force that is applied to the front wheel 3 has to be increased, the first control section 61 controls the inlet valves 32a, 32b and the outlet valves 33a, 33b in the unenergized state, controls the switching valves 38a, 38b and the booster regulators 39a, 39b in the energized state, and drives the motor 36 with the drive amount that corresponds to the output signals from the second brake hydraulic pressure sensors 83a, 83b. By such control, the hydraulic pressures of the brake fluid in the first wheel cylinder 27a and the second wheel cylinder 27b are increased, and the friction members 22a, 22b of the friction application section 22 are thereby pressed against the first disc rotor 3a and the second disc rotor 3b, respectively. That is, during the execution of the emergency braking control operation, in the front-wheel braking section 20, the friction braking force that is applied to the front wheel 3 by the friction application section 22 varies by the control of the inlet valves 32a, 32b, the outlet valves 33a, 33b, the switching valves 38a, 38b, the booster regulators 39a, 39b, and the motor 36 by the controller 60 regardless of the motion of the first operation element 11a and the second operation element 11b. Here, instead of the output signals from the second brake hydraulic pressure sensors 83a, 83b, the command signals that the first control section 61 has transmitted to the inlet valves 32a, 32b, the outlet valves 33a, 33b, the switching valves 38a, 38b, the booster regulators 39a, 39b, and the driver in the motor 36 immediately before the transmission of the output signals may be used.

In addition, during the execution of the emergency braking control operation, in the state where the regenerative braking force that is applied to the rear wheel 4 has to be increased, the second control section 62 increases the electric power for charging the power storage device of the power supply unit 6. By such control, the electric load on the electric motor 5 that functions as the generator is increased, so as to increase the regenerative braking force generated by the electric motor 5. That is, during the execution of the slippage control operation, in the rear-wheel braking section 40, the regenerative braking force that is applied to the rear wheel 4 by the electric motor 5 varies by control of the electric power for charging the power storage device of the power supply unit 6 by the controller 60 regardless of the motion of the operation element 11.

For example, in the interlocking brake control, the lock control operation, the slippage control operation, the stop assistance control operation, the emergency braking control operation, which have been described above, and the like, the controller 60 may be configured to cause the second friction brake mechanism 21b to generate some or all of the target braking forces of the front-wheel braking section 20 and the rear-wheel braking section 40.

The controller 60 includes: the above-described acquisition section 63 that acquires the abnormality information on the abnormality of the front-wheel braking section 20; and the above-described execution section 64 that executes the control of the switching valve 38b, the booster regulator 39b, and the motor 36 as the actuators on the basis of the abnormality information.

The acquisition section 63 monitors the output of the rear wheel rotational frequency sensor 91 and the stored power remaining amount sensor 92, and the like, for example, and, based on the output of these sensors and the like, determines in a specified cycle whether the electric motor 5 as the regenerative brake mechanism can function as the generator to generate the regenerative braking force. When determining that the regenerative brake mechanism can generate the regenerative braking force, the acquisition section 63 sets regeneration information indicating that the regenerative braking force can be generated in a storage unit of the controller 60, and continues monitoring and the determination. On the other hand, when determining that the regenerative braking force cannot be generated (for example, when the rotational frequency of the rear wheel 4 is lower than a reference value for the power generation, when the free capacity of the power storage device is insufficient, or the like), the acquisition section 63 sets the regeneration information indicating that the regenerative braking force cannot be generated in the storage unit of the controller 60.

In addition, the acquisition section 63 monitors history of the output of the front wheel rotational frequency sensor 81, the first brake hydraulic pressure sensors 82a, 82b, and the second brake hydraulic pressure sensors 83a, 83b, the operation of the first control section 61 and the second control section 62, and the like, for example, and determines in a specified cycle whether the first friction brake mechanism 21a and the second friction brake mechanism 21b in the front-wheel braking section 20 function normally. When determining that the front-wheel braking section 20 functions normally, the acquisition section 63 sets the abnormality information indicating that the abnormality does not occur to the front-wheel braking section 20 in the storage unit of the controller 60, and continues monitoring and the determination. On the other hand, when determining that the front-wheel braking section 20 does not function normally (for example, when an actual braking force output by the front-wheel braking section 20 does not satisfy the target braking force of the front-wheel braking section 20, when an output value of each of the first brake hydraulic pressure sensors 82a, 82b and the second brake hydraulic pressure sensors 83a, 83b falls below a reference value, which is set in advance at specified timing, and the braking force by the front-wheel braking section 20 may not satisfy the target braking force, or the like), when determining that the first friction brake mechanism 21a does not function normally, or when the second friction brake mechanism 21b does not function normally, the acquisition section 63 sets the abnormality information indicating that the abnormality occurs to the front-wheel braking section 20 in the storage unit of the controller 60.

In response to the above determination, in the case where it is determined that the regenerative braking force cannot be generated on the basis of the regeneration information set in the storage unit of the controller 60, and in the case where it is determined that the abnormality occurs to the front-wheel braking section 20 on the basis of the abnormality information, the execution section 64 executes control for actuating the switching valves 38a, 38b, the booster regulators 39a, 39b, and the motor 36 as the actuators and generating and increasing the friction braking forces by the first friction brake mechanism 21a and the second friction brake mechanism 21b on the basis of the travel state of the two-wheeled motor vehicle 10, operation states of the first operation element 11a and the second operation element 11b, and the like, for example.

Meanwhile, in the case where it is determined that the abnormality occurs to the first friction brake mechanism 21a of the front-wheel braking section 20 on the basis of the abnormality information, the execution section 64 executes control for actuating the switching valve 38b and the booster regulator 39b in the second friction brake mechanism 21b, and the motor 36 as the actuators and generating and increasing the friction braking forces by the second friction brake mechanism 21b on the basis of the travel state of the two-wheeled motor vehicle 10, the operation states of the first operation element 11a and the second operation element 11b, and the like, for example. Furthermore, in the case where it is determined that the abnormality occurs to the second friction brake mechanism 21b of the front-wheel braking section 20, the execution section 64 executes control for actuating the switching valve 38a and the booster regulator 39a in the first friction brake mechanism 21a and the motor 36 as the actuators and generating and increasing the friction braking forces by the first friction brake mechanism 21a.

As it has been described so far, the brake system 100 in this embodiment is the brake system for the two-wheeled motor vehicle 10 as the straddle-type vehicle of the rear-wheel-drive type, and includes: the front-wheel braking section 20 that brakes the front wheel 3 of the two-wheeled motor vehicle 10; the rear-wheel braking section 40 that brakes the rear wheel 4 of the two-wheeled motor vehicle 10; and at least one of the operation elements 11a, 11b operated by the rider of the two-wheeled motor vehicle 10. The front-wheel braking section 20 includes the first friction brake mechanism 21a that is connected to the friction application section 22 for applying the friction force only to the front wheel 3 and controls the braking force generated by the friction application section 22. The rear-wheel braking section 40 does not include the friction brake mechanism that generates the braking force by friction, but includes the regenerative brake mechanism 5 (the electric motor 5) that generates the regenerative braking force on the rear wheel 4. The front-wheel braking section 20 further includes the second friction brake mechanism 21b that is connected to the friction application section 22 and can control the braking force generated by the friction application section 22 in a manner to be independent of the first friction brake mechanism 21a.

In addition, the brake system 100 in this embodiment includes the first operation element 11a and the second operation element 11b that are shared by the front-wheel braking section 20 and the rear-wheel braking section 40. The controller 60 executes the interlocking brake control to divide the requested braking force by the rider, which is acquired on the basis of the operation amounts of the first operation element 11a and the second operation element 11b, into the target braking force of the front-wheel braking section 20 and the target braking force of the rear-wheel braking section 40 and thereby generate the braking forces by the front-wheel braking section 20 and the rear-wheel braking section 40.

In this embodiment, the brake system 100 is configured to include the operation elements 11a, 11b that are operated by the rider's hand. However, the brake system may be configured to include an operation element that is operated by a part other than the rider's hand, such as the rider's foot.

### <Regarding Effects of Brake System>

Conventionally, as the brake system for the straddle-type vehicle of the rear-wheel-drive type in which the rear wheel is driven by the electric motor, the following brake system is available. The brake system includes: the regenerative brake mechanism that applies the regenerative torque to the rear wheel and thereby brakes the rear wheel, the regenerative torque being generated when the electric motor functions as the generator by the rotation of the rear wheel, for example; and the friction brake mechanism that generates the friction force on the front wheel in response to the operation of the brake lever by the rider and thereby brakes the front wheel. In the thus-configured brake system, the regenerative brake mechanism inputs the rotary power to the shaft of the electric motor, thereby makes the electric motor function as the generator, and brakes the wheel of the straddle-type vehicle by the regenerative torque that is generated during the power generation. Accordingly, for example, when the rotational frequency of the rear wheel, to which the electric motor is connected, is low, when the rotation of the rear wheel is stopped, when the electric motor cannot generate the electric power, or the like, the braking force that can be generated by the regenerative brake mechanism may be insufficient relative to the target value, or the braking force may not be generated. As a result, in some cases, the two-wheeled motor vehicle cannot be stopped from the travel state or cannot maintain the stopped state.

To handle the above problem, the brake system 100 in this embodiment is the brake system for the two-wheeled motor vehicle 10 as the straddle-type vehicle of the rear-wheel-drive type, and includes: the front-wheel braking section 20 that brakes the front wheel 3 of the two-wheeled motor vehicle 10; the rear-wheel braking section 40 that brakes the rear wheel 4 of the two-wheeled motor vehicle 10; and at least one of the operation elements 11a, 11b operated by the rider of the two-wheeled motor vehicle 10. The front-wheel braking section 20 includes the first friction brake mechanism 21a that is connected to the friction application section 22 for applying the friction force only to the front wheel 3 and controls the braking force generated by the friction application section 22. The rear-wheel braking section 40 does not include the friction brake mechanism that generates the braking force by the friction, but includes the regenerative brake mechanism 5 (the electric motor 5) that generates the regenerative braking force on the rear wheel 4. The front-wheel braking section 20 further includes the second friction brake mechanism 21b that is connected to the friction application section 22 and can control the braking force generated by the friction application section 22 in the manner to be independent of the first friction brake mechanism 21a.

With such a configuration, the front-wheel braking section 20 in the brake system 100 includes the second friction brake mechanism 21b that can control the braking force generated by the friction application section 22 in the manner to be independent of the first friction brake mechanism 21a. Accordingly, when the second friction brake mechanism 21b generates the friction force to brake the front wheel 3 that exerts a significant impact on the stability and operability of the two-wheeled motor vehicle 10, it is possible to generate the braking force by the second friction brake mechanism 21b in addition to the first friction brake mechanism 21a and the regenerative brake mechanism 5 in the independent manner while maintaining the stability and the operability of the two-wheeled motor vehicle 10 during braking. Therefore, it is possible to improve safety of the two-wheeled motor vehicle 10 during braking by increasing the braking force that can be generated by the brake system.

In the brake system 100 in this embodiment, the first friction brake mechanism 21a controls the outlet valve 33a in the open state, controls the pump 35a in the driven state, and thereby causes the pump 35a to pump the brake fluid out of the first accumulator 34a while releasing the brake fluid from the first wheel cylinder 27a into the first accumulator 34a, so as to reduce the hydraulic pressure in the first wheel cylinder 27a. In this way, the first friction brake mechanism 21a can reduce the friction force that is applied to the front wheel 3 by the friction application section 22 and thus can reduce the braking force generated on the front wheel 3. Meanwhile, the second friction brake mechanism 21b is configured to control the inlet valve 32b and the booster regulator 39b in the open state, control the pump 35b in the driven state, and thereby increase the hydraulic pressure in the second wheel cylinder 27b by moving the brake fluid into the second wheel cylinder 27b. In this way, the second friction brake mechanism 21b can increase the friction force that is applied to the front wheel 3 by the friction application section 22, and thus can increase the braking force generated on the front wheel 3.

With such a configuration, since the first friction brake mechanism 21a can reduce at least the braking force, it is possible to cancel locking or possible locking of the front wheel 3, and the like by executing the anti-lock brake control, for example. In addition, since the second friction brake mechanism 21b can increase at least the braking force, the braking force that is controlled by the first friction brake mechanism 21a can be compensated by the braking force that is controlled by the second friction brake mechanism 21b, or the like, for example.

In the brake system 100 in this embodiment, the first friction brake mechanism 21a includes the inlet valve 32a, the outlet valve 33a, the switching valve 38a, the booster regulator 39a, the first accumulator 34a, the pump 35a, a check valve 130a, and the brake fluid paths 25c to 25e for connecting these components, and these components are provided to the base body 31. Meanwhile, the second friction brake mechanism 21b includes the inlet valve 32b, the outlet valve 33b, the switching valve 38b, the booster regulator 39b, the second accumulator 34b, the pump 35b, a check valve 130b, and the brake fluid paths 26c to 26e for connecting these components, and these components are provided to the base body 31. That is, at least a part of the first friction brake mechanism 21a and at least a part of the second friction brake mechanism 21b are provided to the common base body 31.

With such a configuration, since at least the part of the first friction brake mechanism 21a and at least the part of the second friction brake mechanism 21b are provided to the common base body 31, the first friction brake mechanism 21a and the second friction brake mechanism 21b, each of which controls the braking force generated on the front wheel 3, can easily be mounted to the two-wheeled motor vehicle 10.

In the brake system 100 in this embodiment, the first friction brake mechanism 21a and the second friction brake mechanism 21b respectively include the pumps 35a, 35b, each of which moves the brake fluid. These pumps 35a, 35b are driven by the common motor 36. When the pumps 35a, 35b are driven, the hydraulic pressure in the first wheel cylinder 27a and the hydraulic pressure in the second wheel cylinder 27b are increased or reduced, and the braking force that is generated on the front wheel 3 is thereby controlled. That is, the first friction brake mechanism 21a and the second friction brake mechanism 21b each control the braking force that is generated on the front wheel 3 by using the motor 36 as the common drive source.

With such a configuration, since the first friction brake mechanism 21a and the second friction brake mechanism 21b each control the braking force that is generated on the front wheel 3 by using the motor 36 as the common drive source, it is possible to downsize and reduce weight of the front-wheel braking section 20 by reducing the number of the motors.

In the brake system 100 in this embodiment, the first friction brake mechanism 21a is connected to the first master cylinder 23a that generates the hydraulic pressure of the brake fluid in conjunction with the motion of the first operation element 11a, and the second friction brake mechanism 21b is connected to the second master cylinder 23b that generates the hydraulic pressure of the brake fluid in conjunction with the motion of the second operation element 11b.

With such a configuration, the hydraulic pressure of the brake fluid according to the motion of the first operation element 11a is input to the first friction brake mechanism 21a, and the hydraulic pressure of the brake fluid according to the motion of the second operation element 11b is input to the second friction brake mechanism 21b. Thus, it is possible to control the braking force generated on the front wheel 3 on the basis of the motion of the operation element 11 that is intended and operated by the rider of the two-wheeled motor vehicle 10. Here, it may be configured that at least one of the first friction brake mechanism 21a and the second friction brake mechanism 21b is connected to the master cylinder, and even with such a configuration, the same effect as that obtained by the configuration in this embodiment can be exerted.

The friction application section 22 in this embodiment includes: the friction member 22a and the friction member 22b as pressed members, each of which is pressed against respective one of the first disc rotor 3a and the second disc rotor 3b of the front wheel 3 to apply the friction force; the first wheel cylinder 27a as a first hydraulic chamber that receives the hydraulic pressure of the brake fluid for actuating the friction member 22a from the first friction brake mechanism 21a; and the second wheel cylinder 27b as a second hydraulic chamber that receives the hydraulic pressure of the brake fluid for actuating the friction member 22b from the second friction brake mechanism 21b.

With such a configuration, since the hydraulic pressures input from the first friction brake mechanism 21a and the second friction brake mechanism 21b can be received by the mutually different first hydraulic chamber (first wheel cylinder 27a) and second hydraulic chamber (second wheel cylinder 27b), respectively, the friction member 22a and the friction member 22b as the pressed members can be actuated in the manner to be independent of each other in the first friction brake mechanism 21a and the second friction brake mechanism 21b. Here, the friction member 22a and the friction member 22b may be configured integrally or may be configured separately.

The friction members as the pressed members in this embodiment are configured to include: the friction member 22a as a first pressed member that applies, to the front wheel 3, the friction force corresponding to the hydraulic pressure in the first wheel cylinder 27a as the first hydraulic chamber; and the friction member 22b as a second pressed member that applies, to the front wheel 3, the friction force corresponding to the hydraulic pressure in the second wheel cylinder 27b as the second hydraulic chamber.

With such a configuration, the friction member 22a can apply, to the front wheel 3, the friction force that corresponds to the hydraulic pressure of the brake fluid input to the first wheel cylinder 27a from the first friction brake mechanism 21a, and the friction member 22b can apply, to the front wheel 3, the friction force that corresponds to the hydraulic pressure of the brake fluid input to the second wheel cylinder 27b from the second friction brake mechanism 21b.

The brake system 100 in this embodiment includes the mutually different first operation element 11a and second operation element 11b. The first operation element 11a is connected to the first friction brake mechanism 21a, and the second operation element 11b is connected to the second friction brake mechanism 21b. In the friction application section 22 that is connected to the first friction brake mechanism 21a and the second friction brake mechanism 21b, the braking force is generated on the front wheel 3 in conjunction with the motion of each of the first operation element 11a and the second operation element 11b.

With such a configuration, the different operation element is connected to each of the first friction brake mechanism 21a and the second friction brake mechanism 21b. Accordingly, in the case where the abnormality occurs to one of the operation elements, the other operation element can be operated to generate the braking force on the front wheel 3 via the corresponding friction brake mechanism. Therefore, it is possible to improve the safety of the two-wheeled motor vehicle 10 during braking.

The brake system 100 in this embodiment is configured to include the operation elements 11a, 11b as the operation elements, each of which is operated by the rider's hand. With such a configuration, since the rider operates the operation elements 11a, 11b with his/her hand, the rider can finely adjust the operation thereof in comparison with the operation by the rider's foot, for example. Therefore, it is possible to improve the operability of the brake system 100.

### <Regarding Modified Examples of Front-Wheel Braking Section>

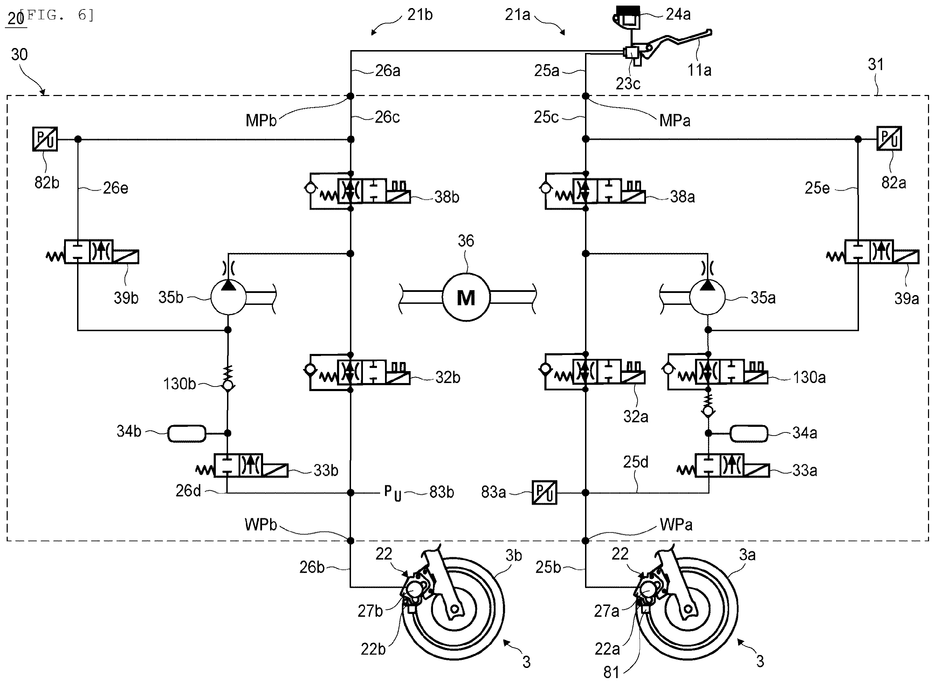

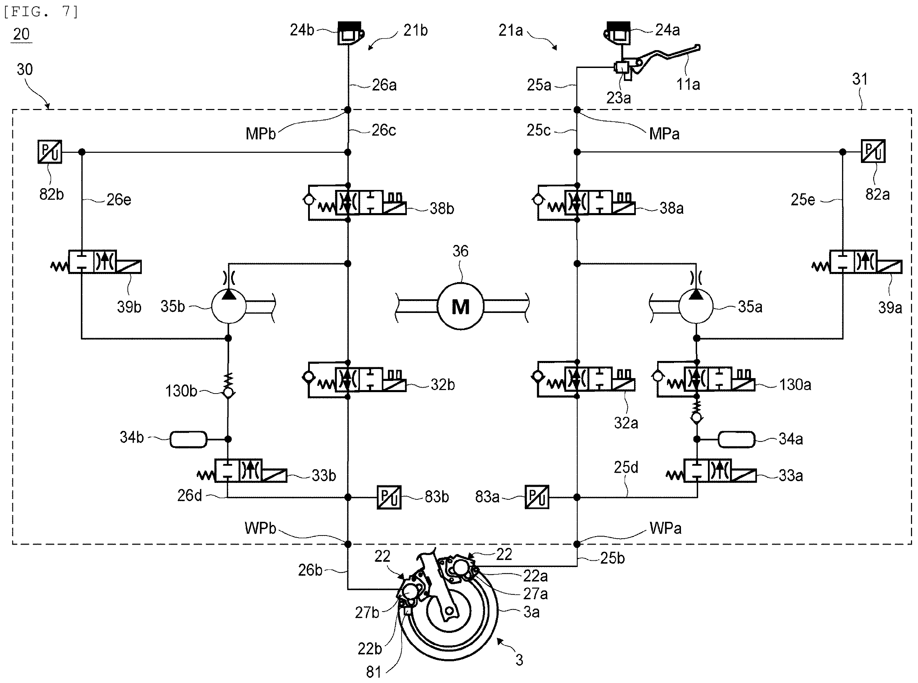

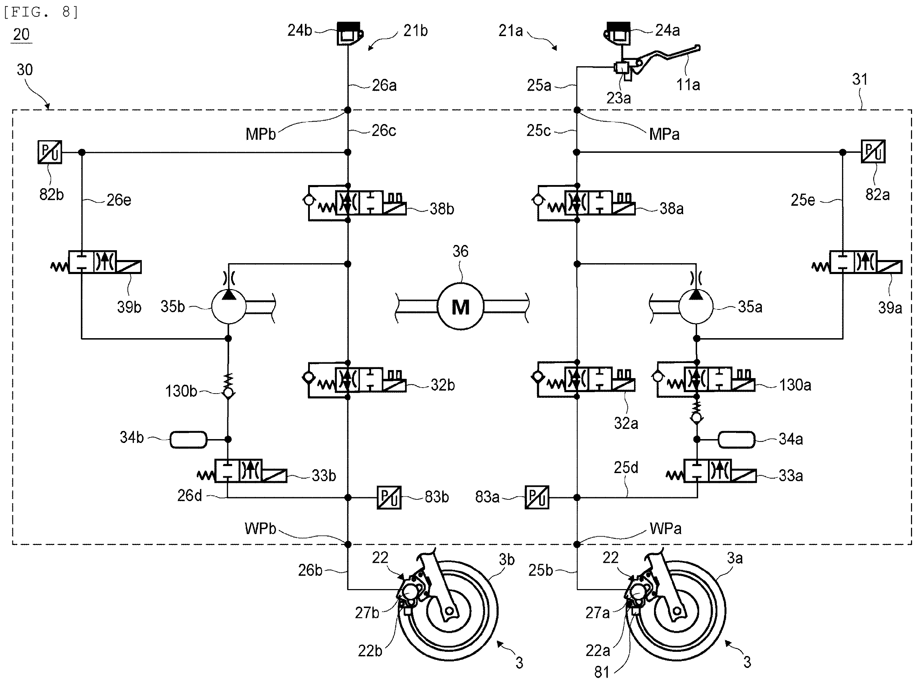

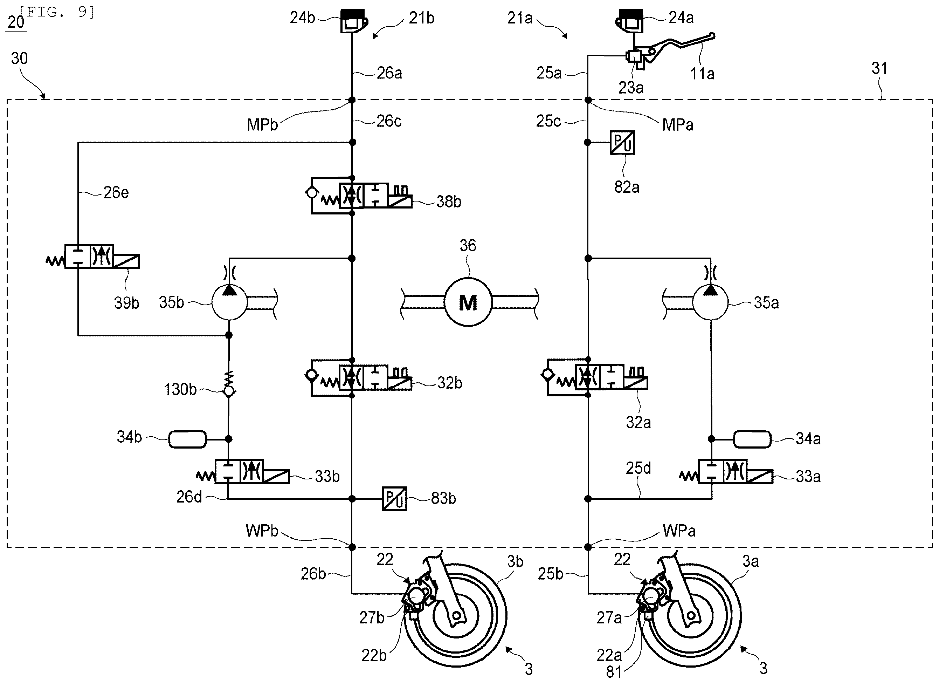

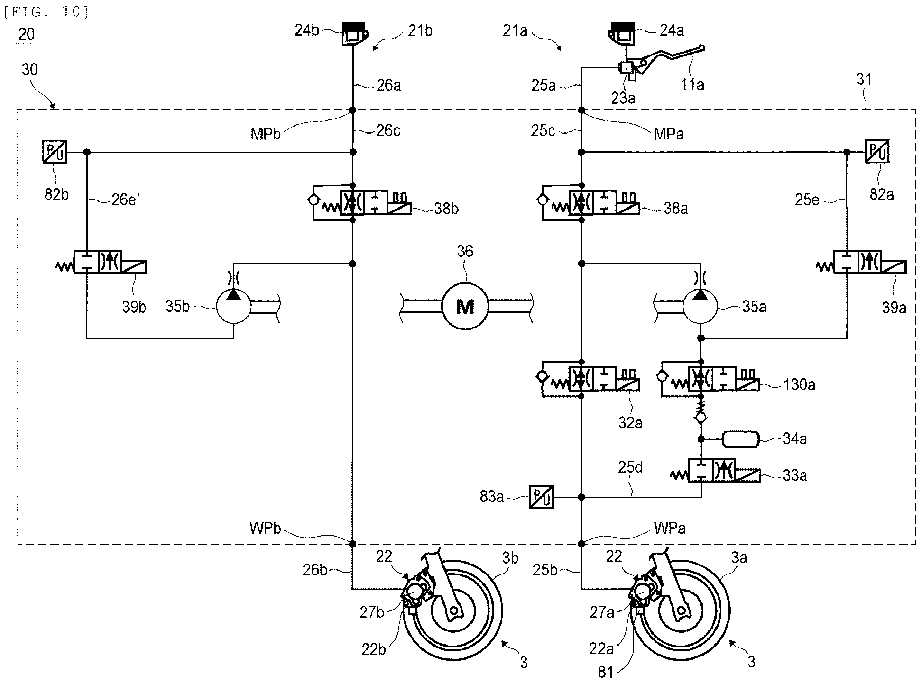

A description will be made on modified examples of the front-wheel braking section 20 with reference to Fig. 6 to Fig. 10. Fig. 6 is a view for illustrating a first modified example of the front-wheel braking section 20. Fig. 7 is a view for illustrating a second modified example of the front-wheel braking section 20. Fig. 8 is a view for illustrating a third modified example of the front-wheel braking section 20. Fig. 9 is a view for illustrating a fourth modified example of the front-wheel braking section 20. Fig. 10 is a view for illustrating a fifth modified example of the front-wheel braking section 20.

In this embodiment, the brake system 100 is configured to include the two mutually different operation elements (see Fig. 2). However, the brake system 100 may be configured to include only one operation element. For example, as illustrated in Fig. 6, as the configuration that the brake system 100 includes the only one operation element, the brake system 100 may be configured to include a tandem-type master cylinder 23c that generates the hydraulic pressure of the brake fluid in the two hydraulic chambers in conjunction with the motion of the operation element 11a, so as to be able to output the hydraulic pressure in each of the hydraulic chambers. The first friction brake mechanism 21a may be connected to one of the two hydraulic chambers in the master cylinder 23c, and the second friction brake mechanism 21b may be connected to the other of the two hydraulic chambers in the master cylinder 23c. Alternatively, for example, as illustrated in Fig. 7 to Fig. 10, the first friction brake mechanism 21a and the second friction brake mechanism 21b may be configured as the friction brake mechanisms of a so-called by-wire type. The first friction brake mechanism 21a may be connected to the master cylinder 23a that generates the hydraulic pressure of the brake fluid in conjunction with the motion of the operation element 11a, and the second friction brake mechanism 21b may be connected to the first reservoir 24a instead of the operation element 11a, thus is not connected to the operation element 11a, and applies, to the front wheel 3, the friction force, which corresponds to the hydraulic pressure of the brake fluid according to the control of at least the pump 35b as the actuator, by the friction application section 22.

According to such a configuration that the only one operation element 11a is provided as an operation unit of the brake system 100 by the rider, the braking force on the front wheel 3 is controlled by each of the first friction brake mechanism 21a and the second friction brake mechanism 21b when the rider operates the only one operation element 11a. Thus, the rider's brake operation can be simplified. Here, the operation element in the invention is the operation element for the rider's brake operation. The two-wheeled motor vehicle 10 may be configured to include the operation element as the operation unit for operating a mounted device or the like of the two-wheeled motor vehicle 10, for example, other than the brake operation.

In this embodiment, the brake system 100 is configured to include the two mutually different operation elements (see Fig. 2). However, as illustrated in Fig. 6, the brake system 100 may be configured that the first friction brake mechanism 21a and the second friction brake mechanism 21b each generate the braking force for the friction application section 22 in conjunction with the motion of the common operation element 11a. With such a configuration, when the operation element 11a that is common to the first friction brake mechanism 21a and the second friction brake mechanism 21b is operated, the braking force on the front wheel 3 is controlled by each of the first friction brake mechanism 21a and the second friction brake mechanism 21b. Thus, the rider's brake operation can be simplified.

In this example, the friction application section 22 in the brake system 100 includes the first disc rotor 3a and the second disc rotor 3b that are provided to the front wheel 3. Then, each of the disc rotors 3a, 3b is held between a respective pair of the friction members 22a, 23a to apply the friction, and the braking force is thereby generated on the front wheel 3 (see Fig. 2). However, for example, as illustrated in Fig. 7, the friction application section 22 may include: the one disc rotor 3a; the pair of the friction members 22a that is actuated and holds the disc rotor 3a therebetween according to the hydraulic pressure in the first wheel cylinder 27a as the first hydraulic chamber; and the pair of the friction members 22b that is actuated and holds the disc rotor 3a therebetween according to the hydraulic pressure in the second wheel cylinder 27b as the second hydraulic chamber, and different areas of the disc rotor 3a may be held between the two pairs of the friction members 22a, 22b to apply the friction, and the braking force may thereby be generated on the front wheel 3. Alternatively, in the friction application section 22, the common friction members (not illustrated) may be actuated according to the hydraulic pressure in the first wheel cylinder 27a as the first hydraulic chamber and the hydraulic pressure in the second wheel cylinder 27b as the second hydraulic chamber, and hold the disc rotor 3a therebetween to apply the friction, and the braking force may be generated on the front wheel 3.

In this embodiment, the first friction brake mechanism 21a includes the booster regulator 39a, the booster fluid path 25e, and the pump 35a, moves the brake fluid from the first reservoir 24a to the first wheel cylinder 27a by driving the pump 35a, and thus can increase the hydraulic pressure in the first wheel cylinder 27a regardless of the motion of the operation element (see Fig. 2). However, the first friction brake mechanism 21a only needs to be able to reduce at least the hydraulic pressure in the first wheel cylinder 27a. Thus, as illustrated in Fig. 9, the first friction brake mechanism 21a may not include the booster regulator 39a and the booster fluid path 25e, and at least include the outlet valve 33a.

In this embodiment, the second friction brake mechanism 21b includes the inlet valve 32b, the outlet valve 33b, the second accumulator 34b, the switching valve 38b, the booster regulator 39b, and the pump 35b, and can generate, increase, reduce, or eliminate the hydraulic pressure in the second wheel cylinder 27b at a response speed corresponding to the anti-lock brake control or slippage prevention control, for example. However, the second friction brake mechanism 21b only needs to be able to increase at least the hydraulic pressure in the second wheel cylinder 27b and generate the braking force for stopping the front wheel 3. As illustrated in Fig. 10, the second friction brake mechanism 21b may not include the inlet valve 32b, the outlet valve 33b, and the second accumulator 34b, and may include at least the switching valve 38b and the pump 35b, so as to increase the hydraulic pressure in the second wheel cylinder 27b. With such a configuration, the second friction brake mechanism 21b can cause the friction application section 22 to apply, to the front wheel 3, the friction force for stopping the two-wheeled motor vehicle 10 from the travel state.

The second friction brake mechanism 21b may not include the inlet valve 32b, the outlet valve 33b, and the second accumulator 34b but may include the booster regulator 39b in addition to the switching valve 38b and the pump 35b. With such a configuration, the second friction brake mechanism 21b can reduce leakage of the brake fluid to the fluid path on the upstream side of the pump 35b by controlling the booster regulator 39b in the closed state, and thus can maintain the friction force that is applied to the front wheel 3 by the friction application section 22.

As it has been described so far, the configuration of the hydraulic circuit provided to each of the first friction brake mechanism 21a and the second friction brake mechanism 21b is not limited to the configuration in this example, and the check valve 130b and/or an electromagnetic valve 130 may appropriately be added, for example.

### <Second Embodiment>

A description will be made on a second embodiment of the brake system according to the invention and a straddle-type vehicle including the brake system with reference to the drawings. Configurations of the straddle-type vehicle and the brake system in this embodiment each have the same configuration in the above-described first embodiment. Thus, a description herein will mainly be made on different points therefrom. The same configuration as that in the first embodiment may not be described.

In the brake system 100 of the first embodiment, the first friction brake mechanism 21a of the front-wheel braking section 20 is hydraulically connected to the first operation element 11a. However, in the brake system 100 of the second embodiment, as will be described below, the friction brake mechanism of the by-wire type is provided as the first friction brake mechanism 21a. The friction brake mechanism of the by-wire type is not hydraulically connected to the first operation element 11a, and applies the friction force, which corresponds to control of a moving device 73 as an actuator, to the front wheel 3 by friction members 71a, 71b as friction application sections.

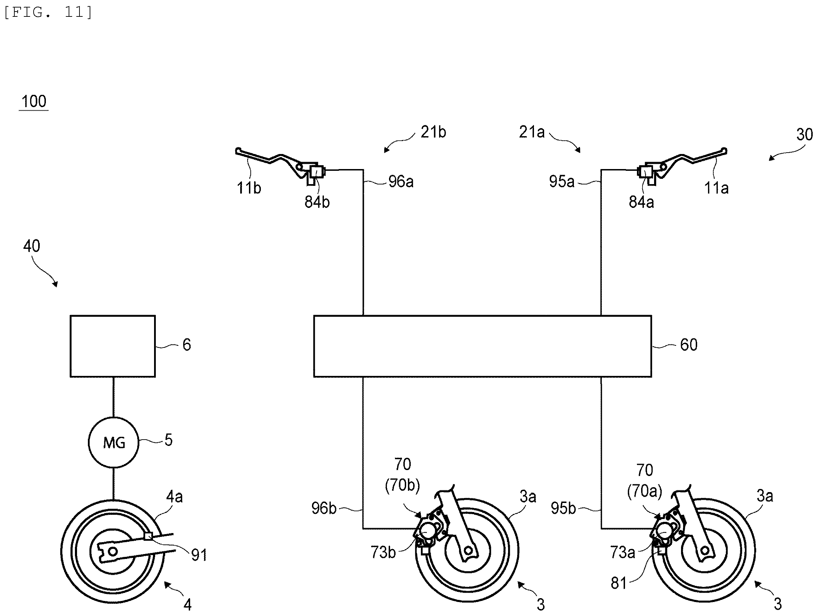

A description will be made on the second embodiment of the brake system according to the invention and the straddle-type vehicle including the brake system with reference to Fig. 11 to Fig. 13.

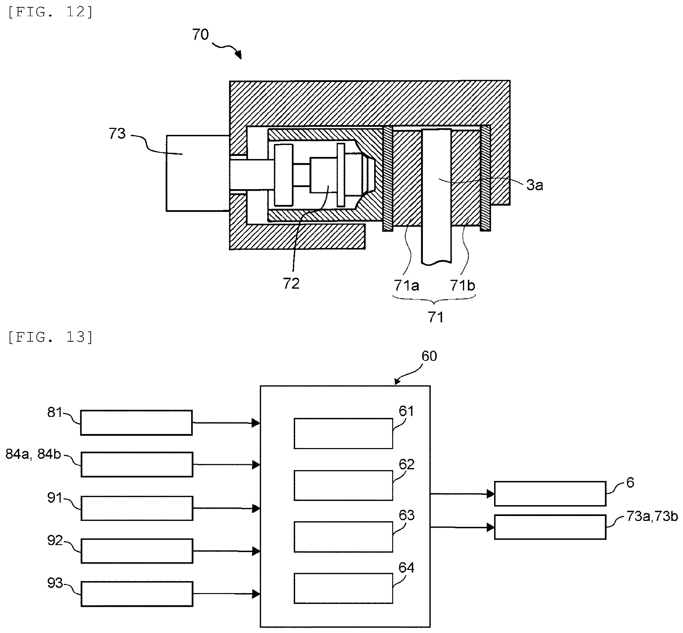

Fig. 11 is a view for illustrating the brake system according to the second embodiment. Fig. 12 is a view for illustrating the friction brake mechanism of the by-wire type in the brake system according to the second embodiment. Fig. 13 is a diagram for illustrating a system configuration of the brake system according to the second embodiment.

### <Regarding Brake System>

As illustrated in Fig. 11, the brake system 100 includes: the first operation element 11a and the second operation element 11b, each of which is operated by the rider of the two-wheeled motor vehicle 10; the front-wheel braking section 20 that brakes the front wheel 3; the rear-wheel braking section 40 that brakes the rear wheel 4; and the controller 60 that controls the braking forces for the front wheel 3 and the rear wheel 4, and is mounted to the two-wheeled motor vehicle 10 as the straddle-type vehicle. In addition, the brake system 100 includes the first friction brake mechanism 21a of the by-wire type and the second friction brake mechanism 21b of the by-wire type in the front-wheel braking section 20.

As illustrated in Fig. 12, the front-wheel braking section 20 includes a friction application unit 70 that is configured as a floating caliper and includes: the paired friction members 71a, 71b that are arranged to oppose each other; a spindle 72 that adjusts a distance of each of the friction members 71a, 71b to the disc rotor 3a of the front wheel 3; and the moving device 73 that generates linear motion of the spindle 72.

The friction members 71a, 71b are configured as the paired friction members 71a, 71b that hold the disc rotor 3a of the front wheel 3 therebetween, and the friction force is generated when an opposing surface of each of the friction members 71a, 71b opposing the disc rotor 3a is pressed against the disc rotor 3a. The friction members 71a, 71b correspond to the friction application section according to the invention.

The spindle 72 is coupled to the moving device 73, can make the linear motion, and adjusts the distance of each of the friction members 71a, 71b to the disc rotor 3a by the linear motion. The linear motion of the spindle 72 may be transmitted to the friction members 71a, 71b via an elastic member, or may be transmitted to the friction members 71a, 71b via a fluid such as a hydraulic fluid. Hereinafter, in some cases, of directions of the linear motion of the spindle 72, a direction in which the distance of each of the friction members 71a, 71b to the disc rotor 3a is reduced, that is, a direction in which the friction members 71a, 71b are brought close to or pressed against the disc rotor 3a will be referred to as a first direction, and an opposite direction from the first direction, that is, a direction in which the friction members 71a, 71b move away from the disc rotor 3a will be referred to as a second direction.

The moving device 73 is a motor, for example, is actuated in response to a control signal from the controller 60 to cause the spindle 72 to make the linear motion, and thereby adjusts the distance between the spindle 72 and each of the friction members 71a, 71b. In addition, the moving device 73 is attached to the outside of the friction application unit 70 and is unitized with the friction application unit 70. However, the friction application unit 70 may have another structure. For example, the friction application unit 70 may be configured as an opposing caliper. In addition, for example, the moving device 73 may be installed in the friction application unit 70.

In the friction application unit 70, the moving device 73 causes the spindle 72 to move in the first direction on the basis of the control signal transmitted from the controller 60, the distance of each of the friction members 71a, 71b to the disc rotor 3a is thereby reduced, and the friction members 71a, 71b are pressed against the disc rotor 3a. As a result, the friction braking force is increased. Meanwhile, when the moving device 73 causes the spindle 72 to move in the second direction on the basis of the control signal, the distance of each of the friction members 71a, 71b to the disc rotor 3a is increased, and the friction members 71a, 71b move away from the disc rotor 3a. As a result, the friction braking force is reduced.

In this embodiment, the first friction brake mechanism 21a of the by-wire type is configured just as described. The first friction brake mechanism 21a of the by-wire type is not hydraulically connected to the operation element 11a, and uses the spindle 72 and the moving device 73 in the friction application unit 70 to cause the friction members 71a, 71b as the friction application section to apply, to the front wheel 3, the friction force, which corresponds to the control of the moving device 73 as the actuator. Since the second friction brake mechanism 21b has the same configuration as the first friction brake mechanism 21a, a description thereon will not be made.

As illustrated in Fig. 13, the controller 60 includes: the first control section 61 that controls operation of the moving device 73 provided to each of the first friction brake mechanism 21a and the second friction brake mechanism 21b in the front-wheel braking section 20; and the second control section 62 that controls the operation of the electric motor 5 as the generator provided to the rear-wheel braking section 40.

The controller 60 receives the output signals from the front wheel rotational frequency sensor 81, friction member motion sensors 84a, 84b, the rear wheel rotational frequency sensor 91, the stored power remaining amount sensor 92, the surrounding environment sensor 93, and the like in the wired or wireless manner, for example. The controller 60 may receive the output signals from other sensors. As in the above-described first embodiment, the controller 60 derives the target braking force to be generated on each of the front wheel 3 and the rear wheel 4 on the basis of the output signals from those sensors. The first control section 61 outputs the command signal, which corresponds to the target braking force to be generated on the front wheel 3, to a driver in the moving device 73 in the wired or wireless manner. Meanwhile, the second control section 62 outputs the command signal, which corresponds to the target braking force to be generated on the rear wheel 4, to the controller, which controls the electric power for charging the power storage device, in the wired or wireless manner.

The friction member motion sensor 84a detects the motion of the friction members 71a, 71b in the friction application unit 70. The friction member motion sensor 84a is held by the friction application unit 70, for example. The friction member motion sensor 84a can be any sensor as long as the friction member motion sensor 84a detects a physical quantity to which the braking force generated on the front wheel 3 by the friction application unit 70 is reflected. For example, the friction member motion sensor 84a may detect a drive amount of the moving device 73 or may detect a reaction force that acts on the spindle 72. The friction member motion sensor 84a may detect another physical quantity that can substantially be converted to the drive amount of the moving device 73 or the reaction force that acts on the spindle 72.

The first control section 61 and the second control section 62 are accommodated in a housing of the friction application unit 70, for example. The first control section 61 and the second control section 62 are unitized with the friction members 71a, 71b, the spindle 72, and the moving device 73. Alternatively, the second control section 62 may be unitized with the electric motor 5.

For example, in the interlocking brake control, the lock control operation, the slippage control operation, the stop assistance control operation, the emergency braking control operation, which have been described above, and the like, the controller 60 uses the friction braking forces by the friction brake mechanisms 21a, 21b in the front-wheel braking section 20 as some or all of the target braking forces of the front-wheel braking section 20 and the rear-wheel braking section 40. At this time, the controller 60 executes control for driving the moving device 73 in each of the friction brake mechanisms to move the friction member such that the distance of the friction member, which corresponds to each of the friction brake mechanisms, to the disc rotor 3a becomes a distance corresponding to the friction braking force used as the target braking force.

The controller 60 includes: the acquisition section 63 described above that acquires the abnormality information on the abnormality of the front-wheel braking section 20; and the execution section 64 described above that executes the control of the moving device 73 as the actuator on the basis of the abnormality information.

For example, in the case where the acquisition section 63 monitors the output of the rear wheel rotational frequency sensor 91 and the stored power remaining amount sensor 92, and the like, and determines that the regenerative brake mechanism cannot generate the regenerative braking force (for example, in the case where the rotational frequency of the rear wheel 4 is lower than the reference value for the power generation, in the case where the free capacity of the power storage device is insufficient, or the like), the acquisition section 63 sets the regeneration information indicating that the regenerative braking force cannot be generated in the storage unit of the controller 60.

In addition, for example, in the case where the acquisition section 63 monitors the history of the output of the front wheel rotational frequency sensor 81, the first brake hydraulic pressure sensors 82a, 82b, and the second brake hydraulic pressure sensors 83a, 83b, the operation of the first control section 61 and the second control section 62, and the like, and determines that the front-wheel braking section 20 does not function normally, the acquisition section 63 sets the abnormality information indicating that the abnormality occurs to the front-wheel braking section 20 in the storage unit of the controller 60.

To handle the above, in the case where it is determined that the regenerative braking force cannot be generated on the basis of the regeneration information set in the storage unit of the controller 60, the execution section 64 executes control for actuating the moving device 73 as the actuator and for generating and increasing or reducing and eliminating the friction braking force by the friction brake mechanisms 21a, 21b of the front-wheel braking section 20 on the basis of the travel state of the two-wheeled motor vehicle 10, the operation state of the operation element 11, and the like, for example.

In addition, in the case where it is determined that the abnormality occurs to either one of the friction brake mechanisms 21a, 21b in the front-wheel braking section 20 on the basis of the abnormality information set in the storage unit of the controller 60, the execution section 64 executes control for actuating the moving device 73 as the actuator of the friction brake mechanism, which is not determined that the abnormality occurs thereto, and for generating and increasing or reducing and eliminating the friction braking force by the corresponding friction application unit 70 on the basis of the travel state of the two-wheeled motor vehicle 10, the operation state of the operation element 11, and the like, for example.

As it has been described so far, the front-wheel braking section 20 in this embodiment includes the friction application unit 70, and applies the friction to the front wheel 3 by the friction members 71a, 71b as the friction application section according to the control of the moving device 73 as the actuator, so as to be able to generate the braking force on the front wheel 3.

### <Regarding Effects of Brake System>

The first friction brake mechanism 21a in this embodiment is the friction brake mechanism of the by-wire type that is not hydraulically connected to the operation elements 11a, 11b and applies, to the front wheel 3, the friction force corresponding to the control of the moving device 73 as the actuator by the friction members 71a, 71b as the friction application section. The second friction brake mechanism 21b is the friction brake mechanism of the by-wire type that is not hydraulically connected to the operation element and applies, to the front wheel 3, the friction force corresponding to a moving device 73b as the actuator by the friction members 71c, 71b as the friction application section.

With such a configuration, the front-wheel braking section 20 can be installed in a small space by connecting between the operation element 11a and the first friction brake mechanism 21a of the by-wire type and between the operation element 11b and the second friction brake mechanism 21b of the by-wire type with electrical control lines or radio waves. Therefore, it is possible to improve mountability of the brake system 100 to the two-wheeled motor vehicle 10.

The description has been made so far on the brake systems 100 according to the first and second embodiments. However, the brake system according to the invention is not limited to those in the description of the embodiments. For example, only a part of the embodiments may be implemented. Reference Signs List

1: Trunk
2: Handlebar
3: Front wheel
4: Rear wheel
5: Electric motor (regenerative brake mechanism)
6: Power supply unit
10: Two-wheeled motor vehicle
11a: First operation element
11b: Second operation element
20: Front-wheel braking section
21a: First friction brake mechanism
21b: Second friction brake mechanism
22: Friction application device (friction application section)
23a: First master cylinder
23b: Second master cylinder
24a: First reservoir
24b: Second reservoir
25a to 25e: Fluid path
26a to 26e: Fluid path
27a: First wheel cylinder
27b: Second wheel cylinder
30: Hydraulic pressure adjustment unit
31: Base body
32a, 32b: Inlet valve
33a, 33b: Outlet valve
34a, 34b: Accumulator
35a: First pump
35b: Second pump (actuator)
36: Motor
37: Housing
38a, 38b: Switching valve
39a, 39b: Booster regulator
40: Rear-wheel braking section
60: Controller
61: First control section
62: Second control section
70a, 70b: Friction application unit
71a, 71b: Friction member (friction application section)
72: Spindle
73: Moving device (actuator)
81: Front-wheel rotational frequency sensor
82: First brake hydraulic pressure sensor
83: Second brake hydraulic pressure sensor
84a, 84b: Friction member motion sensor
91: Rear-wheel rotational frequency sensor
92: Stored power remaining amount sensor
93: Surrounding environment sensor
100: Brake system

## Claims

1. A brake system (100) for a straddle-type vehicle (10) of a rear-wheel-drive type, the brake system comprising:
a front-wheel braking section (20) that brakes a front wheel (3) of the straddle-type vehicle (10);
a rear-wheel braking section (40) that brakes a rear wheel (4) of the straddle-type vehicle (10); and
at least one operation element (11a, 11b) that is operated by a rider of the straddle-type vehicle (10),
wherein
the front-wheel braking section (20) includes a first friction brake mechanism (21a) that is connected to a friction application section (22, 71a, 71b) applying a friction force only to the front wheel (3) and controls a braking force generated by the friction application section,
the rear-wheel braking section (40) does not include a friction brake mechanism that generates a braking force by friction, but includes a regenerative brake mechanism (5) that generates a regenerative braking force on the rear wheel (4), and
the front-wheel braking section (20) further includes a second friction brake mechanism (21b) that is connected to the friction application section (22, 71a, 71b) and can control the braking force generated by the friction application section in a manner to be independent of the first friction brake mechanism (21a).

2. The brake system according to claim 1, wherein
the first friction brake mechanism (21a) can reduce at least the braking force, and
the second friction brake mechanism (21b) can increase at least the braking force.

3. The brake system according to claim 1 or 2, wherein
at least a part of the first friction brake mechanism (21a) and at least a part of the second friction brake mechanism (21b) are provided to a common base body (31).

4. The brake system according to claim 1 or 2, wherein
the first friction brake mechanism (21a) and the second friction brake mechanism (21b) each control the braking force generated on the front wheel (3) by using a common drive source (36).

5. The brake system according to claim 1 or 2, wherein
at least one of the first friction brake mechanism (21a) and the second friction brake mechanism (21b) is connected to a master cylinder (23a, 23b) that generates a hydraulic pressure of a brake fluid in conjunction with motion of the operation element (11a, 11b).

6. The brake system according to claim 5, wherein
the friction application section (22) includes:
at least one pressed member (22a, 22b) that is pressed against the front wheel (3) and applies the friction force to the front wheel (3);
a first hydraulic chamber (27a), to which the hydraulic pressure of the brake fluid actuating the pressed member is input from the first friction brake mechanism (21a); and
a second hydraulic chamber (27b), to which the hydraulic pressure of the brake fluid actuating the pressed member is input from the second friction brake mechanism (21b).

7. The brake system according to claim 6 further comprising,
as the pressed member (22a, 22b):
a first pressed member (22a) that applies the friction force corresponding to the hydraulic pressure in the first hydraulic chamber (27a) to the front wheel (3); and
a second pressed member (22b) that applies the friction force corresponding to the hydraulic pressure in the second hydraulic chamber (27b) to the front wheel (3).

8. The brake system according to claim 1 or 2, wherein
at least one of the first friction brake mechanism (21a) and the second friction brake mechanism (21b) is a brake mechanism (70a, 70b) of a by-wire type that is not hydraulically connected to the operation element (11a, 11b) and applies, to the front wheel (3), the friction force corresponding to control of an actuator (73) by the friction application section (71a, 71b).

9. The brake system according to claim 1 or 2, wherein
the first friction brake mechanism (21a) and the second friction brake mechanism (21b) each cause the friction application section (22, 71a, 71b) to generate the braking force in conjunction with motion of the common operation element (11a).

10. The brake system according to claim 1 or 2, wherein
the one operation element (11a) is provided.

11. The brake system according to claim 1 or 2, wherein
the first friction brake mechanism (21a) and the second friction brake mechanism (21b) each cause the friction application section (22, 71a, 71b) to generate the braking force in conjunction with motion of respective one of the mutually different operation elements (11a, 11b).

12. A straddle-type vehicle comprising:
the brake system (100) according to claim 1 or 2.
